# EUROPÄISCHE PATENTSCHRIFT

(11) **EP 3 767 732 B1**
(45) Veröffentlichungstag und Bekanntmachung des Hinweises auf die Patenterteilung: **06.12.2023**
(21) Anmeldenummer: 20185948.5
(22) Anmeldetag: 15.07.2020
(51) Int. Cl.: H01M 50/213, H01M 10/42, H01M 50/24, B25F 5/00, H01M 50/247

(54) **AKKUPACK**
RECHARGEABLE BATTERY
BLOC-BATTERIE

(30) Priorität: 16.07.2019 DE 102019119242
(43) Veröffentlichungstag der Anmeldung: 20.01.2021
(73) Patentinhaber: Metabowerke GmbH, 72622 Nürtingen (DE)
(72) Erfinder: Stoll, Michael, 73240 Wendlingen (DE); Fleischmann, Bernd, 73235 Weilheim (DE)
(74) Vertreter: Markfort, Iris-Anne Lucie

(56) Entgegenhaltungen:
- EP-A2- 0 940 864
- EP-A2- 2 224 513
- DE-A1-102014 209 444
- DE-B3-102018 104 342
- US-A1- 2015 194 710

## Beschreibung

Die vorliegende Erfindung betrifft ein Akkupack für eine Handwerkzeugmaschine mit wenigstens einer Akkuzelle, einem Zellenträger zur abschnittsweisen Aufnahme und Lagerung der wenigstens einen Akkuzelle in einem Aufnahmeraum des Zellenträgers sowie einer Vergussmasse, die in montiertem Zustand des Akkupacks im Aufnahmeraum des Zellenträgers Zwischenräume zwischen dem Zellenträger und der wenigstens einen darin aufgenommenen Akkuzelle ausfüllt.

Akkupacks mit einer oder mehreren Akkuzellen sind aus dem Stand der Technik in unterschiedlichen Größen mit einer unterschiedlichen Anzahl parallel und in Reihe geschalteter Zellen bekannt, wodurch die von dem Akkupack bereitgestellte Kapazität und die bereitgestellte Spannung an den jeweiligen Einsatzzweck angepasst werden können. Vorliegend ist das Akkupack insbesondere für Handwerkzeugmaschinen geeignet. Selbstverständlich lässt sich die vorliegende Erfindung auch an andere Einsatzzwecke anpassen und kann beispielsweise bei elektrisch betriebenen Kraftfahrzeugen oder dergleichen Anwendung finden. Die wenigstens eine Akkuzelle kann als Lithium-Ionen-Akkuzelle oder als Nickel-Metall-hybrid-Akkuzelle oder dergleichen ausgebildet sein. Im Falle mehrerer Akkuzellen ist es üblich, dass in einem Akkupack Akkuzellen eines Zellentyps verwendet werden. Es kann aber auch für einige Anwendungen sinnvoll sein, Akkuzellen unterschiedlicher Zellentypen einzusetzen.

Insbesondere bei der Verwendung von Lithium-Ionen-Akkuzellen können die im Betrieb auftretenden Umwelteinflüsse, wie z. B. Wasser und Metallstaub, im Falle eines Einsatzes des Akkupacks in einer Handwerkzeugmaschine zu Kurzschlüssen oder Korrosion führen, so dass das Akkupack beschädigt oder sogar zerstört wird. Daher besteht eine bekannte Aufgabe im Zusammenhang mit Akkupacks für Handwerkzeugmaschinen darin, die Akkuzellen insbesondere vor derartigen Umwelteinflüssen zu schützen.

Eine weitere Problemstellung resultiert aus der im Zusammenhang mit Handwerkzeugmaschinen benötigten hohen Leistungsfähigkeit des Akkupacks. Üblicherweise befinden sich in einem Akkupack mehrere Lithium-Ionen-Zellen, die Wärme erzeugen. Je größer der Entladestrom der Zellen ist, desto mehr Wärme wird erzeugt. Um die Akkuzellen vor einer Zerstörung oder Beschädigung durch diese entstehende Wärme zu schützen, ist es üblich, dass die Akkupackelektronik bei einer zu großen Temperatur an den Zellen die weitere Entladung des Akkupacks unterbricht, so dass der Anwender mit diesem Akkupack bis zu dessen Abkühlung nicht weiter arbeiten kann.

Daher ist es inzwischen ebenfalls üblich geworden, Lösungen in dem Akkupack bereitzustellen, die eine zuverlässige Abführung der entstehenden Wärme ermöglichen. Hierdurch kann entweder länger mit dem Akkupack gearbeitet werden oder mit einem höheren Entladestrom entladen werden, was gleichbedeutend mit einer höheren Leistungsfähigkeit des Akkupacks ist.

Eine bekannte Lösung sieht vor, dass das Innere des Akkupacks mit Hilfe eines von außen eindringenden Kühlluftstroms gekühlt wird, wie beispielsweise in der DE 10 2004 020 147 A1 beschrieben. Allerdings führen die für das Eindringen der Kühlluft notwendigen Öffnungen am Akkupackgehäuse zum schnellen Eindringen von Wasser und Metallstaub in den Innenbereich, was wie vorstehend ausgeführt, zu Kurzschlüssen oder Korrosion führen kann. Eine vergleichbare Lösung ist auch in der der US 2016/0240901 A1 beschrieben, bei der mittels mehrerer an dem Zellenträger innenseitig angeordneter Kühlnuten ein definierter Kühlluftstrom entlang der Außenseite der aufgenommenen Akkuzellen geführt werden kann.

Eine weitere Lösung ist in der Druckschrift DE 20 2016 104 759 U1 beschrieben, bei der die Batteriezellen und zugehörige Verbindungsplatten zum Ableiten der auftretenden Wärme miteinander vergossen sind. Ein solcher Verguss soll es erlauben, die Batteriezellen, die Verbindungsplatten und gegebenenfalls die Plusleitungsanordnung und die Minusleitungsanordnung, die ebenfalls vergossen sein können, in einer Position zu fixieren, in der diese elektrisch und thermisch leitfähig miteinander verbunden sind. Der Verguss ist ferner insofern vorteilhaft, als dass dieser aus einem thermisch leitfähigen Material gefertigt sein kann. Somit lässt sich Wärmeenergie einfach aus der Zellanordnung abführen und kann sich innerhalb der ganzen Batterie gleichmäßig verteilen.

Wenngleich diese Lösung eine zuverlässige Kühlung der Akkuzellen ermöglicht, so führt das Vorsehen von zusätzlichen Verbindungsplatten, wie beschrieben, zu einer nennenswerten Erhöhung des Gewichts der Batterie. Bei der beschriebenen Lösung ist dies insofern nicht so relevant, als dass diese insbesondere in elektrisch betriebenen Fahrzeugen zum Einsatz kommen kann. Im Falle einer Handwerkzeugmaschine, die von einem Anwender gehalten werden muss, kann der Gewichtsunterschied von einigen Gramm schon für die Handhabung äußerst relevant sein, weshalb diese Lösung als nachteilig anzusehen ist. Wird auf die Verbindungsplatten verzichtet, so ist die Wärmeableitung, selbst bei einer Vergussmasse, die aus einem thermisch leitfähigen Material gefertigt ist, weniger effizient und es kann wiederum zu einer Überwärmung des Akkupacks kommen.

Aus der DE 10 2013 211 459 A1 ist eine weitere Lösung für einen Handwerkzeugmaschinenakku bekannt, bei der an der Unterseite des Handwerkzeugmaschinenakkupacks ein Kühlkörper angeordnet wird, d. h. ein Körper, der eine besonders große Wärmemenge an eine Umgebung abgeben kann. Bevorzugt weist dieser Kühlkörper eine durch Kühlrippen vergrößerte Oberfläche auf. Vorzugsweise ist dieser zusätzliche Kühlkörper zumindest im Wesentlichen von einem Material mit einer hohen Wärmeleitfähigkeit insbesondere einem Metall gebildet. Der Kühlkörper ist beispielsweise an einer der Seiten des Zellenhalters angeordnet, so dass die Akkuzellen Wärme besonders gut über den Zellenhalter an den Kühlkörper abgeben können.

Eine weitere Lösung mit einem Kühlkörper ist aus der EP 0 940 864 A2 bekannt. Hier sind bei einer spezifischen Ausführungsform die Akkuzellen von Vorsprüngen eines Kühlkörpers umgeben, der auf einer von den Akkuzellen abgewandten Seite Kühlfinnen aufweist, die von einem Kühlluftstrom umströmt werden.

Eine weitere Lösung mit einem Kühlkörper mit Kühlrippen ist in der DE 10 2014 209 444 A1 beschrieben, wobei hier die Akkuzellen in einem Zellhalter in einer silikonbasierten, wärmeleitfähigen Vergussmasse eingebettet sind, um einen guten Wärmeübergang von den Akkuzellen zum Zellhalter sicherzustellen und die Akkuzellen vor Feuchtigkeit und/oder Flüssigkeiten zu schützen. An der Verbindungsseite gegenüberliegenden Seite ist am Zellhalter der Kühlkörper mit Kühlrippen angeordnet, so dass hierüber die Verlustwärme an eine Umgebung abgegeben werden kann.

Die Patentschrift DE 10 2018 104 342 B3 der Anmelderin beschreibt ein luftgekühltes Akkupack, bei dem die Akkuzellen direkt von Kühlluft umströmt werden. Die Pole sind hierbei zum Schutz vor Außeneinflüssen, wie Feuchtigkeit oder Metallstaub luftdicht innerhalb des Gehäuses des Akkupacks aufgenommen.

Weiterhin sind die Akkuzellen nach dem Einsetzen in die Ausnehmungen des Zellhalters mit der Vergussmasse vergossen, wobei die Vergussmasse einen geringen Wärmewiderstand aufweist, wie z. B. eine Vergussmasse auf Silikonbasis. Die Vergussmasse füllt Zwischenräume zwischen den Akkuzellen und dem Zellhalter aus und ermöglicht somit eine besonders gute Wärmeübertragung von den Akkuzellen auf den Zellhalter. Zudem kann mittels der Vergussmasse ein Eindringen von Feuchtigkeit und/oder Flüssigkeiten vermieden werden, so dass die darin eingegossenen Bauteile vor Feuchtigkeit geschützt sind. Korrosion, Fehlströme oder Kurzschlüsse können so verringert werden.

Auch bei dieser Lösung ist jedoch ein zusätzliches Element, nämlich insbesondere ein Kühlkörper aus Metall vorgesehen, der wiederum zu einer Gewichtserhöhung des Akkupacks führt.

Ferner beschreibt die DE 10 2017 109 919 A1 ein Akkumulatorpaket mit einem Gehäuse, das ein erstes Gehäuseteil und mindestens ein zweites Gehäuseteil aufweist, wobei die Gehäuseteile wasserdicht und/oder staubdicht miteinander verbunden sind, mit einer Mehrzahl von Hohlräumen zur Aufnahme von Zellen im ersten Gehäuseteil und mit einer Schnittstelle am zweiten Gehäuseteil, die zur mechanischen und elektrischen Kopplung mit einem externen Gerät ausgebildet ist. Weiterhin weist das Gehäuse eine Mehrzahl von Wärmeleitelementen zur passiven Kühlung an einer Außenoberfläche des Gehäuses auf, wobei das erste Gehäuseteil mit den Hohlräumen gemeinsam mit den Wärmeleitelementen einstückig aus einem wärmeleitfähigen Kunststoff ausgebildet ist.

Bei dieser Lösung wird auf eine Durchlüftung, wie sie vorstehend aus dem Stand der Technik bekannt beschrieben ist, vermieden, und die Kühlung des Akkupacks erfolgt über eine passive Kühlung an der Außenoberfläche des Gehäuses. Auch diese Lösung ist, wenngleich sie eine zuverlässige Kühlung des Akkupacks und zugleich einen guten Schutz vor äußeren Einflüssen bereitstellt, weniger effizient bezüglich der Wärmeabführung als die bekannte Lösung einer Luftkühlung des Akkupacks.

Weiterhin ist es aus dem Stand der Technik auch bekannt, eine mit elektronischen Bauteilen bestückte Leiterplatte eines Akkupacks in einer Aufnahmeschale eines Akkugehäuses aufzunehmen. Aufgrund der spezifischen konstruktiven Ausgestaltung der DE 10 2009 012 176 A1 (und der parallelen EP 2 224 513 A2) wird von der Aufnahmeschale, einem Schalenrand der Aufnahmeschale und der eingesetzten Leiterplatte ein definierter Füllraum gebildet, der mit einer aushärtenden Füllmasse gefüllt wird. Hierdurch soll ein vollständiges Umschließen der elektronischen Bauteile der Leiterplatte und damit ein Schutz gegen Umwelteinflüsse, insbesondere gegen Schmutz und Feuchtigkeit, sichergestellt sein.

An dem Gehäuse ist ein Anzeige- und Betätigungsfeld ausgebildet, das mit einer flexiblen Folie abgedeckt ist, so dass eine vollständige Abdichtung gegenüber der Umgebung gegeben ist. Das Anzeige- und Betätigungsfeld umfasst sowohl Anzeigefenster als auch ein Betätigungsfeld zur Betätigung eines Betätigungselements.

Auf der Leiterplatte sind LEDs angeordnet, die über die zugeordneten Anzeigefenster von außen wahrnehmbar sind. Weiterhin ist auch ein Taster als Betätigungselement auf der Leiterplatte angebracht, der über das Betätigungsfeld an dem Gehäuse von außen bedienbar sein soll. Um zu gewährleisten, dass weder die als Anzeigeelemente genutzten LEDs noch das Betätigungselement durch die Vergussmasse unbrauchbar werden, ist ein Dichtelement vorgesehen, das in der Art eines Dichtrands beispielsweise aus Moosgummi, die Anzeigeelemente und das Betätigungselement dichtend umgibt, so dass die abgetrennten Räume frei von der Vergussmasse bleiben. Hierzu erstreckt sich das Dichtelement über die gesamte Höhe des Füllraums, wobei es zwischen der Leiterplatte und dem Boden der Aufnahmeschale verspannt gehalten ist.

Anders als bei der vorstehend beschriebenen Lösung, ist es aus dem Stand der Technik ebenfalls bekannt, die Leiterplatte zumindest teilweise mit einer Vergussmasse zu vergießen, um sie in diesen Bereichen vor Umwelteinflüssen zu schützen. Die US 2016/0013524 A1 beschreibt beispielsweise eine Lösung, bei der eine Leiterplatte eines Akkupacks, welche in einem Gehäuse aufgenommen ist, teilweise mit einer Vergussmasse vergossen wird. Auch hier ist die Leiterplatte mit LEDs und einem Schalter bestückt. Als Vergussmasse wird eine lichtleitende Masse verwendet, die die LEDs überlagert. Der Schalter bleibt beim Verguss ausgespart. Eine ähnliche Lösung ist in der US 2014/0302353 A1 beschrieben, bei der ein elastisches Harz im Wesentlichen auf der gesamten Oberfläche einer Leiterplatte verteilt ist, mit Ausnahme der relevanten Bereiche der elektrischen Schnittstellen und Verbindungen mit den Leiterblechen und dergleichen.

Im Falle von elektrischen Überlasten ist zum Schutz der elektronischen Bauteile und der Akkuzellen eines Akkupacks üblicherweise wenigstens eine Sicherung vorgesehen. Üblicherweise wird diese als zertifiziertes Zukaufteil in dem Stromkreis des Akkupacks eingesetzt. Alternativen zu derartigen zertifizierten Sicherungen erfordern immer ein stromleitendes Bauteil sowie ein Gehäuse, das das stromleitende Bauteil einhaust, damit dieses, wenn es ab einem bestimmten Schwellenwert zerstört wird, um den Stromkreis zu unterbrechen, keine Beschädigung der weiteren elektrischen Bauteile zur Folge hat. Diesbezüglich wird beispielhaft auch auf die DE 10 2015 110 308 A1 verwiesen.

Demgegenüber besteht eine Aufgabe der vorliegenden Anmeldung, ein Akkupack mit einer verbesserten Kühlwirkung und zugleich einem verlässigen Schutz vor Außeneinflüssen jedweder Art bereitzustellen, das insbesondere bei Handwerkzeugmaschinen zum Einsatz kommen kann.

Demgegenüber schlägt die vorliegende Erfindung einen Akkupack mit den Merkmalen des Anspruchs 1 vor.

Bei der erfindungsgemäßen Lösung weist der Zellenträger ferner wenigstens einen geschlossenen Kühlraum auf, der von dem Aufnahmeraum getrennt bzw. abgeschlossen in dem Zellenträger ausgebildet ist und über Belüftungsöffnungen in Austausch mit der Umgebung steht, so dass der Kühlraum von Kühlluft durchströmt werden kann.

Anders als im Stand der Technik wird somit nicht ein zusätzliches Kühlelement, welches ein zusätzliches Gewicht für das Akkupack mit sich bringt, zur Kühlung des Akkupacks vorgesehen, sondern ein zusätzlicher von dem Aufnahmeraum getrennt in dem Zellenträger ausgebildeter Kühlraum im Inneren des Akkupacks, über den im Inneren des Akkupacks entstehende Wärme, insbesondere im Bereich von Wärmehotspots über die Vergussmasse und den Zellenträger an die den Kühlraum durchströmende Kühlluft abgegeben werden kann.

Die Temperaturverteilung innerhalb der Zellanordnung wird durch eine Vielzahl von Faktoren, wie beispielsweise durch die Art der verwendeten Akkuzellen, die relative Anordnung der Akkuzellen zueinander im Falle von mehreren Akkuzellen, der durch die Akkuzellen fließende Lade- bzw. Entladestrom und der Alterungszustand der jeweiligen Akkuzellen beeinflusst. Als Wärmehotspots werden insbesondere die Bereiche mit erhöhter bzw. mit hohen auftretenden Temperaturen im Betrieb bezeichnet.

Wie bereits im Stand der Technik bekannt, kann die Vergussmasse insbesondere aus einem thermisch leitfähigen Material hergestellt sein.

Dadurch, dass die Vergussmasse Zwischenräume zwischen dem Zellenträger und der wenigstens einen darin aufgenommenen Akkuzelle ausfüllt, kann eine Wärmeübertragung von wenigstens einer aufgenommenen Akkuzelle auf den Zellenträger besonders gut sein. Zudem wird mittels der Vergussmasse das Eindringen von Flüssigkeit und/oder Feuchtigkeit vermieden wie auch das Eindringen von Metallstaub oder dergleichen, so dass die Akkuzelle besonders gut vor äußeren Einflüssen geschützt ist.

Auch der Zellenträger kann seinerseits aus einem wärmeleitfähigen Material hergestellt sein, um eine besonders gute Wärmeableitung zu gewährleisten. Beim Laden oder Entladen der wenigstens einen Akkuzelle im Inneren des Akkupacks auftretende Wärme kann durch den unmittelbaren Kontakt mit dem Zellenträger oder der Vergussmasse an diese Komponenten weitergegeben werden, welche wiederum in Kontakt miteinander stehen, und durch die Kühlluft, welche durch den Kühlraum fließt, gekühlt werden können.

Erfindungsrelevant ist dabei, dass der Kühlraum von dem Aufnahmeraum getrennt in dem Zellenträger ausgebildet ist und derartig geschlossen ist, dass die Kühlluft nicht in den Aufnahmeraum eindringen kann. Damit ein Austausch mit der Umgebung stattfinden kann, befinden sich die Belüftungsöffnungen an dem Zellenträger, die den Kühlraum mit der Umgebung fluidisch verbinden, so dass der Kühlraum von der Kühlluft durchströmt werden kann.

Zur Verbesserung einer solchen Durchströmung können insbesondere auch bekannte Komponenten an einem korrespondierenden Ladegerät und an der Handwerkzeugmaschine beitragen, insbesondere Lüfter und korrespondierende Belüftungsöffnungen, die dann, wenn das Akkupack an dem Ladegerät angeschlossen oder an der Handwerkzeugmaschine angebracht ist, den Belüftungsöffnungen des Akkupacks fluchten.

Wie bereits vorstehend erwähnt, kann die Vergussmasse insbesondere aus einem wärmeleitfähigen aber auch wasserundurchlässigen und/oder flammgeschützten Material hergestellt sein. Die Vergussmasse erfüllt im Wesentlichen die Funktion, die beim Laden und Entladen des Akkupacks entstehende Wärme im Akkupack gleichmäßig zu verteilen und an die Umgebung abzugeben. Darüber hinaus verhindert sie die Ablagerungen von Wasser oder Metallspänen bzw. das Eindringen von Feuchtigkeit an kritischen stromführenden Bereichen.

Insbesondere können auch die Polbereiche der Zellen, an denen die Einzelzellen - sofern mehrere vorgesehen sind - mit Blechteilen zu einem Zellenverbund verschweißt werden und/oder mit einer Elektronikeinheit des Akkupacks verbunden werden, mit Vergussmasse vergossen sein.

Für den Fall, dass mehrere Akkuzellen in dem Akkupack aufgenommen sind, können diese parallel zueinander angeordnet im Akkupack aufgenommen und gelagert sein. Dabei kann vorgesehen sein, dass diese in gleicher Polaritätsrichtung angeordnet sind, das heißt, dass in einem montierten Zustand des Akkupacks die positiven und negativen Zellenpole der galvanischen Zellen der Akkuzellen jeweils nebeneinander zu liegen kommen. Alternativ ist es selbstverständlich auch möglich, die Akkuzellen in ungleicher Polaritätsrichtung zueinander anzuordnen. Während eines Montagevorgangs des Akkupacks können die Akkuzellen vorteilhaft gleichsinnig und/oder in einer gleichen Montagerichtung montiert werden. Eine Serien- oder eine Parallelschaltung der Akkuzellen kann ausschließlich durch entsprechend angepasste Leiterbleche als Verbindungsleiter auf einer oder beiden Seiten möglich sein.

Weiterhin ist es möglich, dass die Akkuzellen derartig im Zellenträger aufgenommen sind, dass der größte Teil der Mantelfläche der Zellen frei zugänglich ist und somit von der Vergussmasse direkt benetzt werden kann, um eine ideale Wärmeabfuhr zu gewährleisten. Dabei können die Zellen beispielsweise nur im Bereich ihrer freien Enden bzw. im Bereich ihrer Pole in korrespondierenden Aufnahmen des Zellenträgers gelagert sein und gegebenenfalls auch beabstandet zueinander angeordnet sein. Bezüglich einer denkbaren Anordnung der Akkuzellen im Inneren des Zellenträgers wird beispielhaft auf die weitere Anmeldung DE 10 2018 104 337.6 der Anmelderin verwiesen.

Die an sich bekannte Technologie der Luftkühlung stellt gegenüber passiven Kühlungslösungen, wie mit Hilfe eines Kühlkörpers oder dergleichen, eine besonders schnelle und effiziente Kühlung des Akkupacks bereit. Dies wirkt sich nicht nur im Betrieb des Akkupacks aus, sondern auch bei den Ladezeiten des Akkupacks am Ladegerät, insbesondere dann, wenn das Ladegerät ebenfalls eine Luftkühlfunktion bereitstellt.

Erfindungsgemäß und unabhängig von der spezifischen Ausgestaltung des Zellenträgers weist das Akkupack ferner ein modulares Gehäuse auf, dass neben dem Zellenträger wenigstens ein mit dem Zellenträger verbindbares Gehäuseteil, insbesondere zwei Seitenteile und einen Gehäusedeckel umfasst. Das zusätzliche Gehäuseteil kann ferner, insbesondere im Falle eines Gehäusedeckels, eine Struktur zur lösbaren Verbindung mit einem Elektrohandwerkzeuggerät und/oder Kontaktelemente zur elektrischen Verbindung mit einem Elektrohandwerkzeuggerät oder einem Akkuladegerät aufweisen.

Je nach Anzahl der in dem Gehäuse aufgenommenen Zellen und nach Ausrichtung der Zellen zueinander kann beispielsweise auch nur ein Seitenteil vorgesehen sein. So kann vorgesehen sein, dass die Akkuzellen in gleicher Polaritätsrichtung angeordnet sind, das heißt, dass in einem montierten Zustand des Akkupacks die positiven und negativen Zellenpole der galvanischen Zellen der Akkuzellen jeweils nebeneinander zu liegen kommen. In diesem Fall kann ebenfalls ein einziges mit dem Zellenträger verbindbares Gehäuseteil, beispielsweise nur ein Seitenteil vorgesehen sein.

Bei der modularen Ausgestaltung des Gehäuses bildet der Zellenträger eine tragende Struktur für das wenigstens eine daran befestigbare Gehäuseteil, das insbesondere lösbar an dem Zellenträger angebracht sein kann, beispielsweise mittels Schrauben oder dergleichen.

Ein weiterer Erfindungsaspekt besteht darin, dass wenigstens ein mit dem Zellenträger verbindbares Gehäuseteil, insbesondere die Seitenteile, an seiner den im Zellenträger aufgenommenen Akkuzellen zugewandten Oberfläche wenigstens ein elektrisch nicht-leitendes Trennelement in Form eines Trennstegs aufweist, das von dem zugehörigen Gehäuseteil in Richtung zu dem Aufnahmeraum der Akkuzellen vorragt, um Bauteile mit unterschiedlicher elektrischer Spannung voneinander zu trennen.

Dieses wenigstens eine Trennelement ist als Trennsteg ausgebildet und derart angeordnet, dass es sich in einem montierten Zustand der Akkupacks, d.h. wenn das zugehörige Gehäuseteil an dem Zellenträger angebracht und die Akkuzellen in dem Zellenträger aufgenommen sind, zwischen Bauteilen mit unterschiedlicher elektrischer Spannung, insbesondere zwischen die Leiterbleche bzw. Leiterfahnen, erstreckt, um diese elektrisch voneinander abzutrennen.

Hierzu ist der wenigstens eine Trennsteg aus einem elektrisch nicht-leitenden Material hergestellt.

Der wenigstens eine Trennsteg kann zudem mit einem oder mehreren korrespondierenden Trennelementen an dem Zellenträger zusammenwirken und gemeinsame eine Trennwand zwischen den Bauteilen unterschiedlicher elektrischer Spannung, insbesondere zwischen den Leiterblechen, ausbilden. Demgemäß kann das wenigstens eine Trennelement des lösbar verbindbaren Gehäuseteils im montierten Zustand des Akkupacks auf dem oder den Trennelementen des Zellenträgers aufliegen, in dieses bzw. diese eingreifen und/oder dieses bzw. diese aufnehmen.

Weiterhin kann vorgesehen sein, dass der Zellenträger wenigstens zwei Zellenträgerteile aufweist, die in montiertem Zustand des Akkupacks miteinander verbunden sind. Durch diese spezifische Ausgestaltung wird eine besonders einfache Herstellung des Zellenträgers ermöglicht.

Insbesondere kann vorgesehen sein, dass die wenigstens zwei Zellenträgerteile im montierten Zustand des Akkupacks gemeinsam den Kühlraum begrenzen.

Weiterhin kann vorgesehen sein, dass der Kühlraum einen Kühlluftkanal umfasst, der in der Teilungsebene der wenigstens zwei Zellenträgerteile verläuft. Dabei können die beiden Zellenträgerteile im Verbindungsbereich, d. h. in dem Bereich, in dem sie im montierten Zustand des Akkupacks miteinander verbunden sind, jeweils einen zu dem zu verbindenden Zellenträgerteil geöffneten Kühlkanal aufweisen, welcher erst durch das Miteinander-Verbinden der beiden Zellenträgerteile geschlossen wird. Bei einer einfachen Ausgestaltungsvariante liegt der Verbindungsbereich in einer Ebene, der sogenannten Teilungsebene. Diese Ausgestaltungsvariante ist besonders einfach und kostengünstig in der Herstellung des Zellenträgers umzusetzen. Andere Gestaltungsvarianten, bei denen der Verbindungsbereich nicht in einer Ebene verläuft, sind selbstverständlich ebenfalls denkbar.

Es kann weiterhin vorgesehen sein, unabhängig von der spezifischen Ausgestaltung des Gehäuses als modulares Gehäuse und unabhängig von der spezifischen Ausgestaltung des Zellenträgers, in Kombination damit oder ohne diese, dass die wenigstens eine Akkuzelle derart in dem Aufnahmeraum des Zellenträgers aufgenommen ist, dass wenigstens einer der beiden Pole der Akkuzelle im montierten Zustand des Akkupacks von der Vergussmasse ausgespart ist.

Die Akkuzelle ist im wesentlichen zylinderförmig, wobei der Begriff "zylinderförmig" nicht auf gerade zylinderförmige Querschnitte beschränkt ist, sondern im mathematischen Sinne durch eine wie auch immer geartete Grundfläche, die durch eine geschlossene Kurve begrenzt ist, gebildet wird. Gemäß der mathematischen Definition umfasst die zylindrische Form eine Mantelfläche sowie zwei Stirnflächen. Im Falle der Akkuzelle sind die Pole der Akkuzelle im Bereich der Stirnflächen angeordnet.

Dabei ist insbesondere derjenige Pol, der aus sicherheitstechnischen Gründen mit einem Überdruckventil ausgestattet sein muss, ausgespart. So ist es beispielsweise bei Lithium-Ionen-Akkuzellen üblich, dass die Pluspole ein solches Überdruckventil aufweisen, über das sie Gas abgeben können, wenn sie überhitzt sind. Durch diese kontrollierte Gasabgabe wird sichergestellt, dass das Akkupack nicht explodiert und damit zu schweren Verletzungen des Anwenders führen kann.

Im Falle des wenigstens einen ausgesparten Zellenpols kann ein modulares Gehäuse, wie vorstehend beschrieben, besonders vorteilhaft sein, da mit Hilfe des wenigstens einen mit dem Zellenträger verbindbaren Gehäuseteils eine Abdichtung des Pols ermöglicht werden kann. So kann vorgesehen sein, dass das wenigstens eine mit dem Zellenträger verbindbare Gehäuseteil, insbesondere ein Seitenteil, einen Dichtungsabschnitt zur dichtenden Verbindung mit dem Zellenträger aufweist, wobei der Dichtungsabschnitt insbesondere einteilig mit dem Gehäuseteil ausgebildet sein kann und ein elastisches Material umfassen kann.

Je nachdem, wie viele Akkuzellen in dem Akkupack aufgenommen sind und wie diese, besonders deren Pole angeordnet sind, kann ein oder können mehrere dem Zellenträger verbindbare Gehäuseteile zur Dichtung des ausgesparten bzw. der ausgesparten Pole vorgesehen sein. Das mit dem Zellenträger verbindbare Gehäuseteil kann einen Dichtungsabschnitt aufweisen, der einteilig mit diesem ausgebildet ist, beispielsweise angespritzt oder dergleichen. Weiterhin kann der Dichtungsabschnitt aus einem elastischen Material hergestellt sein. Denkbar ist beispielsweise eine Variante, bei der zwei Seitenteile vorgesehen sind, die an dem Zellenträger angebracht werden können.

Gemäß einem weiteren von dem Vorsehen einer Dichtung unabhängigen Aspekt kann wenigstens ein mit dem Zellenträger verbindbares Gehäuseteil, insbesondere die Seitenteile, an seiner den im Zellenträger aufgenommenen Akkuzellen zugewandten Oberfläche wenigstens ein Dämpfungselement aufweisen, das aus einem elastomeren Material hergestellt ist.

Das wenigstens eine Dämpfungselement kann insbesondere aus Gummi hergestellt sein.

So ist es beispielsweise denkbar, Dämpfungsstege, -vorsprünge oder dergleichen aus beispielsweise Gummi vorzusehen. Hierüber wird ein robuster Akkupack bereitgestellt, bei dem Stöße von außen über das oder die Dämpfungselemente abgedämpft werden können, so dass diese nicht oder nur gedämpft auf die innerhalb des Akkupacks aufgenommenen Akkuzellen übertragen werden.

Darüber hinaus kann je nach Ausgestaltung des Zellenträgers mit Hilfe des wenigstens einen Dämpfungselements eine schwimmende Lagerung der Akkuzellen innerhalb des Zellenträgers ermöglicht und zugleich ein Toleranzausgleich geschaffen werden. So können die Akkuzellen beispielsweise entlang ihrer Längsachse verschiebbar innerhalb des Zellenträgers aufgenommen sein. Das oder die Dämpfungselemente können in montiertem Zustand des Akkupacks, d.h. wenn die Gehäuseteile an dem Zellenträger angebracht und die Akkuzellen in dem Zellenträger aufgenommen sind, in Anlage an die Pole der Akkuzellen gebracht sein und infolge seiner bzw. ihrer elastischen Eigenschaften geringfügige Lageabweichungen der Akkuzellen und Toleranzen ausgleichen. Zugleich wirkt auch hier die Elastizität des Dämpfungselements dämpfend, d.h. im Falle eines Stoßes oder dergleichen (beispielsweise wenn das Akkupack auf den Boden fällt) wird die Stoßenergie vom Akkugehäuse nur gedämpft auf die Akkuzellen übertragen, wodurch das Akkupack besonders robust ist.

Das wenigstens eine Dämpfungselement kann, wie auch der vorstehend beschriebene Dichtungsabschnitt, integral mit dem wenigstens einen lösbar verbindbaren Gehäuseteil ausgebildet sein, beispielsweise angespritzt oder angegossen sein.

Die Seitenteile können ferner als Zwei-Komponenten-Teile mit einer Hartkomponente und einer Weichkomponente ausgebildet sein, beispielsweise aus einem Hartplastik und angespritzten Gummi. Die Weichkomponente kann dabei so gestaltet sein, dass ein Dichtungselement entsteht, das den oder die von der Vergussmasse freigesparten Pluspol bzw. Pluspole ebenfalls gegen Wassereinfluss zu schützen vermag. Darüber hinaus kann in einem solchen durch das Dichtungselement geschützten Bereich in der Hartkomponente des Seitenteils eine Schwachstelle bzw. Sollbruchstelle eingeformt sein, die bei Ausgasen der Akkuzellen bricht und das aus den Zellen austretende Gas an die Umgebung abgibt. Auch dieses stellt wieder eine Sicherheitsmaßnahme dar, die eine unerwünschte Explosion des Akkugehäuses im Falle einer Überhitzung der Akkuzellen vermeiden soll.

Unabhängig von der spezifischen Ausgestaltung mit einem Dichtungsabschnitt, wie vorstehend beschrieben, kann vorgesehen sein, dass das Gehäuse eine Druckausgleichvorrichtung aufweist.

Wie bereits vorstehend angedeutet, ist es aus der Praxis bekannt, dass Akkuzellen, beispielsweise dann, wenn sie als Lithium-Ionen-Akkuzellen ausgebildet sind, bei Überhitzung über ein Ventil am Plus-Pol große Mengen an Gas ausstoßen können. Demgemäß besteht das Risiko, dass ein komplett abgedichteter Polbereich eines Akkupacks am Plus-Pol beim Abgasen einer oder mehrerer Zellen zu einer Beschädigung des Akkupacks führen könnte. Über die vorgesehene Druckausgleichsvorrichtung, die im Falle eines vorbestimmten Überdrucks an einem der Polbereiche des Akkupacks einen Druckausgleich vorzunehmen vermag, wird einem solchen Problem begegnet. Dabei kann es sich bei der Druckausgleichsvorrichtung um eine Sollbruchstelle, wie vorstehend bereits im Zusammenhang mit der spezifischen Ausgestaltungsvariante der Seitenteile handeln, oder auch um eine Ausnehmung, die mit einem Membran, einem Dichtungsteil oder dergleichen abgedeckt ist, oder um ein Ventil. Eine Sollbruchstelle stellt im Allgemeinen eine einfach herzustellen und kostengünstige Lösung für eine Druckausgleichsvorrichtung dar, während eine abgedeckte Ausnehmung im Falle einer Zerrstörung der Abdeckung (sei es eine Membran, ein Dichtungsteil oder dergleichen) zumindest reparierbar, aber auch teurer in der Herstellung ist. Schließlich stellt ein Ventil eine Lösung dar, die über die gesamte Lebensdauer des Akkupacks immer wieder zum Einsatz kommen kann, jedoch ist ein solches Ventil in der Herstellungsmontage vergleichsweise kostenintensiv, wenn auch die weiteren Vorteile der vorliegenden Erfindung erzielt werden sollen, nämlich insbesondere ein Akkupack, das gegenüber Wasser und Metallstaub abgedichtet ist.

Das erfindungsgemäße Akkupack kann zusätzlich eine Elektronikeinheit umfassen, die in einem weiteren, insbesondere nach außen geöffneten, Aufnahmeraum an dem Zellenträger angebracht ist.

Die Elektronikeinheit umfasst dabei beispielsweise eine Leiterplatte mit diversen Elektronikkomponenten zur Schaltung und Steuerung sowie gegebenenfalls Überwachung der Akkuzellen. Verbindungsleiter, wie beispielsweise Leiterbleche oder dergleichen, die zur Verbindung der wenigstens ein Akkuzelle mit der Leiterplatte vorgesehen sind, können unmittelbar oder mittelbar mit der Leiterplatte verbunden sein, beispielsweise über eine Schraubverbindung oder eine Lötverbindung. Auf Seiten der Akkuzelle kann die Verbindung des Verbindungsleiters ebenfalls beispielweise durch Löten und/oder durch eine Anpresskraft erreicht werden. Der bzw. die Verbindungsleiter können Leiterbleche, Kabel und/oder Drähte umfassen.

Der Zellenträger kann, wie vorstehend erwähnt, einen weiteren Aufnahmeraum aufweisen, in den die Elektronikeinheit aufgenommen werden kann. Der weitere Aufnahmeraum für die Elektronikeinheit ist im Wesentlichen von dem Aufnahmeraum der Zellen getrennt ausgebildet. Dieser weitere Aufnahmeraum kann ferner insbesondere einteilig mit dem Zellenträger ausgebildet sein. Alternativ wäre auch denkbar, dass dieser in einem separaten Bauteil ausgebildet ist, das mit dem Zellenträger verbunden werden kann.

Insbesondere im Falle eines modularen Aufbaues des Gehäuses kann für eine besonders einfache Herstellung vorgesehen sein, dass der Aufnahmeraum nach außen hin geöffnet ist, d. h. in einer von dem ersten Aufnahmeraum der Akkuzellen wegweisenden Richtung. Bei dieser Ausgestaltungsvariante kann ein weiteres mit dem Zellenträger verbindbares Gehäuseteil vorgesehen sein, insbesondere ein Gehäusedeckel, mit dem die aufgenommene Elektronikeinheit des Akkupacks nach außen hin abgedichtet wird.

Für eine Weiterbildung der Erfindung kann vorgesehen sein, dass die Elektronikeinheit im montierten Zustand des Akkupacks in dem weiteren Aufnahmeraum des Zellenträgers mit einer weiteren Vergussmasse vergossen ist. Insbesondere kann die Elektronikeinheit eine Leiterplatte umfassen, die vollständig vergossen wird, um einen optimalen Schutz vor äußeren Einflüssen insbesondere im Rahmen des Herstellungs- und Montageverfahrens zu gewährleisten. Dieser Aspekt eines vollständigen oder nahezu vollständigen Vergusses der Leiterplatte kann selbstverständlich auch unabhängig von der Ausgestaltung des übrigen Zellenträgers, insbesondere unabhängig von dem Vorsehen eines ersten vergossenen Aufnahmeraums für die Akkuzellen, bereitgestellt werden.

Diese weitere Vergussmasse kann eine andere oder die gleiche Vergussmasse sein, die bereits in dem Aufnahmeraum des Akkupacks für die wenigstens eine Akkuzelle verwendet wird. Der Bereich der Elektronikeinheit ist durch die vielen spannungsführenden Teile in der Regel ebenfalls besonders anfällig für Schäden durch eintretendes Wasser, so dass das Vergießen mit einer weiteren Vergussmasse sehr vorteilhaft ist. Bei der Vergussmasse, die in dem ersten Aufnahmeraum für die wenigstens eine Akkuzelle verwendet wird, handelt es sich insbesondere um eine sehr wärmeleitfähige Vergussmasse, um darüber auftretende Wärme, die beim Entladen der Zellen oder beim Arbeiten mit dem Elektrowerkzeug entsteht, möglichst effizient abgeben zu können, während bei der zweiten weiteren Vergussmasse für den zweiten, weiteren Aufnahmeraum des Zellenträgers zur Aufnahme der Elektronikeinheit eine solche Wärmeleitfähigkeit nicht unbedingt nötig ist, da die Elektronikbauteile im Betrieb keine so hohe Wärmeentwicklung aufweisen.

Wärmeleitfähige Vergussmasse kann beispielsweise silikonhaltig sein. Weiterhin kann es sich um ein Zwei-Komponenten-Material, beispielsweise ein Harz handeln, das mit anderen Komponenten kombinierbar ist. Die Vergussmasse kann unabhängig davon, ob es sich dabei um die erste oder zweite Vergussmasse handelt, weiterhin nichtelektrisch leitend und nicht-entflammbar sein, um eine hohe Arbeitssicherheit mit dem Akkupack zu gewährleisten.

Weiterhin kann vorgesehen sein, dass die Elektronikeinheit wenigstens eine Verbindungsbrücke aufweist, um die wenigstens eine Akkuzelle mit der Elektronikeinheit direkt oder indirekt zu verbinden, wobei die wenigstens eine Verbindungsbrücke aus dem weiteren Aufnahmeraum vorragt, um insbesondere auch nach dem Verguss der Elektronikeinheit eine elektrische Verbindung mit der wenigstens einen Akkuzelle zu ermöglichen.

Durch die zusätzliche wenigstens eine Verbindungsbrücke wird eine einfache und sichere Verbindungsmöglichkeit einer in dem weiteren Aufnahmeraum des Zellenträgers aufgenommenen Elektronikeinheit zu der wenigstens einen Akkuzelle geschaffen. So kann die Verbindungsbrücke die Elektronikeinheit direkt oder indirekt über beispielsweise ein Leiterblech mit der wenigstens einen Akkuzelle verbinden. Insbesondere aufgrund der spezifischen Ausgestaltung des weiteren Aufnahmeraums als von dem Aufnahmeraum der Zelle getrennten Aufnahmeraum, der insbesondere nach außen hin geöffnet sein kann, wird hierdurch die Montage des Akkupacks vereinfacht.

Zudem kann der Schritt des Vergießens der Elektronikeinheit in dem weiteren Aufnahmeraum (sofern dies erwünscht ist) im Herstellungsverfahren des Akkupacks zu einem vergleichsweise frühen Zeitpunkt erfolgen, da über die wenigstens eine Verbindungsbrücke eine elektrische Verbindung auch dann noch gewährleistet ist, wenn die Elektronikeinheit im weiteren Aufnahmeraum vollständig vergossen ist. Dies ermöglicht es, die Elektronikeinheit mit dem Zellenträger vorzumontieren und bereits mit der weiteren Vergussmasse zu vergießen, wodurch die Elektronikeinheit geschützt ist. Das Handling der vormontierten Einheit wird hierdurch nennenswert vereinfacht ohne dass die Qualität und Langlebigkeit der Elektronikeinheit beeinträchtigt wird. Auch kann die weitere Vergussmasse im Falle eines frühzeitigen Vergusses ohne Zeitverluste in der Montage vollkommen durchtrocknen, was unter herstellungstechnischen Gesichtspunkten sehr vorteilhaft ist und Kosten einspart.

Bei der spezifischen Ausgestaltungsvariante einer mit einer weiteren Vergussmasse vergossenen Elektronikeinheit kann die Elektronikeinheit zudem wenigstens eine elektrische Sicherung aufweisen, die ein Blechteil umfasst, welches in einem vergossenen Zustand der Elektronikeinheit zumindest abschnittsweise in der weiteren Vergussmasse mitvergossen ist.

Hierdurch kann zum einen eine sehr kostengünstige Umsetzung einer elektrischen Sicherung gegenüber einer üblicherweise eingesetzten Sicherung (als zertifiziertes Zukaufteil), die ein separates Gehäuse umfasst, bereitgestellt werden. Zum anderen wird die Funktionalität einer Sicherung durch den Schutz des Blechteils durch die Vergussmasse sichergestellt. Das Blechteil kann am Minuspol oder am Pluspol der elektrischen Schnittstelle des Akkupacks auf der Leiterplatte der Elektronikeinheit aufgelötet und mit der Leiterplatte vergossen werden. Selbstverständlich kann auch an jedem der Pole der elektrischen Schnittstelle des Akkupacks, beispielsweise umgesetzt durch mehrere verbundene Anschlussschwerter, eine derartige Sicherung vorgesehen sein.

Es kann schließlich vorgesehen sein, dass ein Teil des Akkupacks von einer wasserabweisenden Umhüllung, beispielsweise aus einem Gummimaterial oder einem flexiblen Kunststoffmaterial, umgeben ist. Diese Umhüllung kann zusätzlich dem Spritzwasserschutz des Akkupacks dienen und gleich einem Luftballon auf einen Teil des Akkupacks aufgezogen werden. Insbesondere bei einem modularen Aufbau des Akkupacks kann diese Umhüllung vor Abschluss der Montage auf beispielsweise den Zellenträger mit Leiterplatte und Akkuzellen sowie gegebenenfalls mit Seitenteilen aufgezogen werden. Die Öffnung der Umhüllung, durch welche diese vormontierte Einheit des Akkupacks in die Umhüllung eingesetzt wird, kann im Anschluss daran beispielsweise mit dem Gehäusedeckel dichtend abgeschlossen werden, wobei die Belüftungsöffnungen weiterhin geöffnet verbleiben. Anders als bei bekannten Varianten eines Spritzwasserschutzes, beispielsweise mittels einer Ummantelung mit einem wasserabweisendem Tape oder einer abschließenden Tauchversiegelung des gesamten Akkupacks mit Harz oder dergleichen, lässt sich diese Lösung einfach und unkompliziert auf nur einen Teil des Akkupacks anwenden, so dass die benötigten Belüftungsöffnungen zur Bereitstellung einer Luftkühlung des Akkupacks (AirCool-Technologie) beibehalten werden können.

Weiterhin kann vorgesehen sein, dass die Umhüllung im Bereich ihrer Öffnung an ein Kunststoffteil des Akkugehäuses, beispielsweise an den Gehäusedeckel oder ein separates Kunststoffteil zur Aufnahme der elektronischen Kontakte des Akkupacks angeschweißt oder anvulkanisiert wird. Alternativ kann eine dichtende Befestigung an dem Akkupackgehäuse auch durch permanent anliegenden Druck bzw. ein Einklemmen zwischen Gehäuseteilen, wie beispielsweise zwischen den Seitenteilen und dem Gehäusedeckel, erreicht werden.

Ergänzend sei darauf hingewiesen, dass Begriffe, wie "umfassend" "aufweisen" oder "mit" keine anderen Merkmale oder Schritte ausschließen. Ferner schließen die Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Fig. 1: ein erfindungsgemäßes Akkupack in isometrischer Darstellung;
- Fig. 2a, b, c: das Akkupack nach Figur 1 ohne Seitenteile und Gehäusedeckel sowie ein Seitenteil in isometrischer Darstellung in zwei Ausführungsformen;
- Fig. 3: das Akkupack nach Figur 2 ohne Vergussmasse auf der Elektronikeinheit;
- Fig. 4: den Akkupack der Figuren 1 bis 3 ohne Vergussmasse gemäß einer ersten Ausführungsform;
- Fig. 5: den Zellenträger des Akkupacks der Figuren 1 bis 4;
- Fig. 6: den Akkupack der Figuren 1 bis 5 mit einem freigeschnittenen Teil und ohne Elektronikbecher;
- Fig. 7a: den Akkupack der Figuren 1 bis 3 ohne Vergussmasse gemäß einer zweiten Ausführungsform und
- Fig. 7b: den Akkupack der Figur 7a mit Vergussmasse ohne Elektronikbecher.

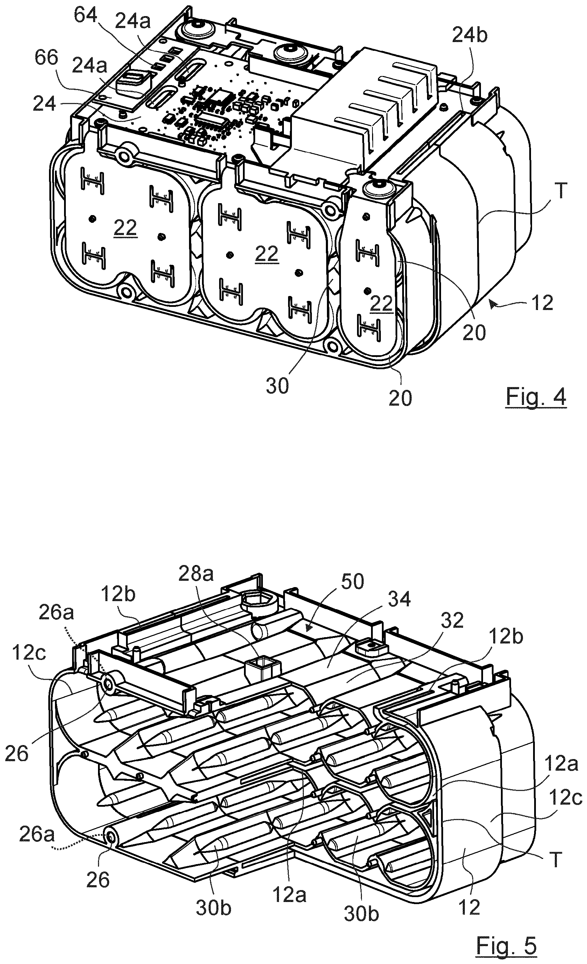

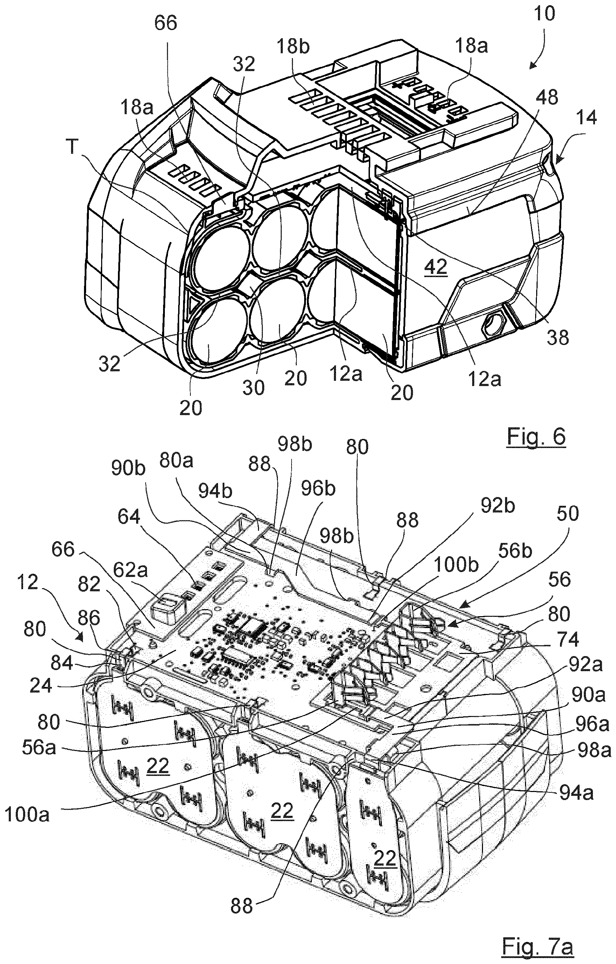

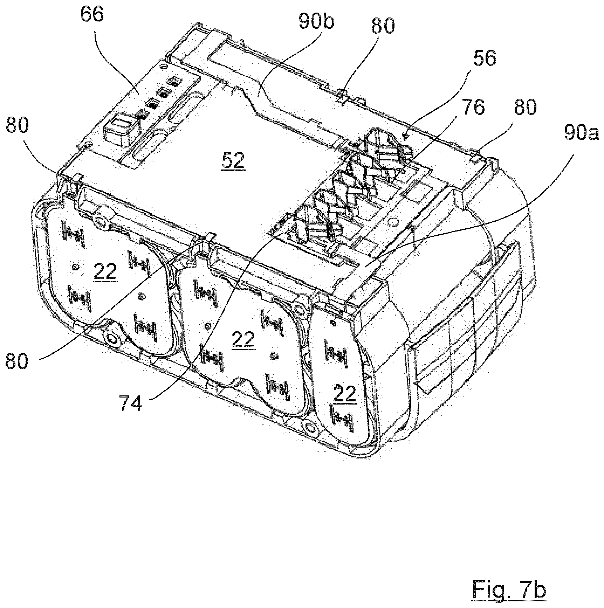

Die Figuren zeigen erfindungsgemäße Ausführungsformen eines Akkupacks für ein Elektrohandwerkzeuggerät, das allgemein mit dem Bezugszeichen 10 bezeichnet ist. Dabei unterscheidet sich die erste Ausführungsform (wie in der Fig. 4 gezeigt) in Details betreffend die Leiterplatte 24 und deren Verguss von der zweiten Ausführungsform (wie in den Figuren 7a und 7b gezeigt).

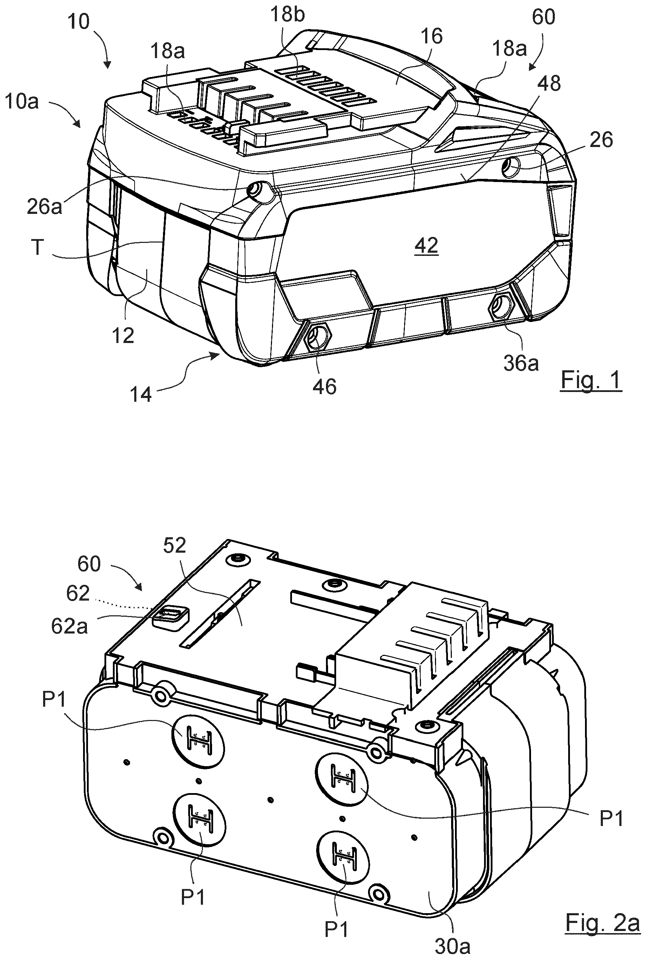

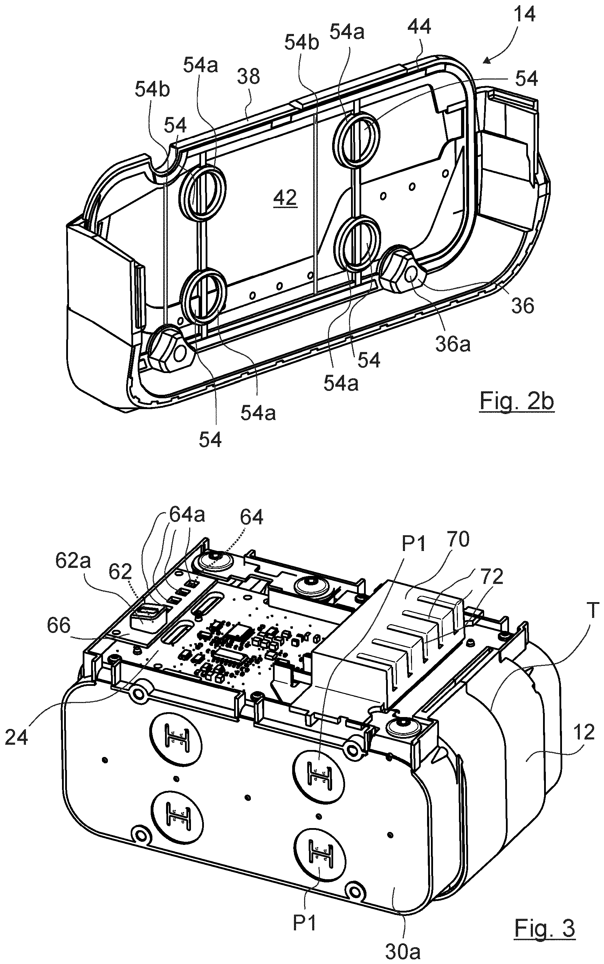

Das in den gezeigten Ausführungsformen modular aufgebaute Gehäuse 10a eines erfindungsgemäßen Akkupacks 10 setzt sich aus mehreren das Gehäuse bildenden Gehäuseteilen wie folgt zusammen: einem Zellenträger 12, zwei Seitenwände bzw. Seitenteile 14 (vgl. auch Fig. 2b), die seitlich an dem Zellenträger 12 lösbar angebracht werden, sowie wenigstens einem Gehäusedeckel 16 (vgl. Fig. 4), der auf den Zellenträger 12 lösbar aufgesetzt werden kann. In den Figuren 2a bis 5 sind dabei die Seitenteile 14 und der obere Gehäusedeckel 16 als lösbare Gehäuseteile zur besseren Darstellung der innenliegenden Komponenten des Akkupacks 10 weggelassen.

Grundsätzlich ist im nachfolgenden eine Vielzahl von Erfindungsaspekten beschrieben, die losgelöst voneinander in einem Akkupack 10 zur Anwendung kommen können. Aufgrund des modularen Aufbaus des Akkupacks können je nach gewünschter Anwendung einzelne Module in unterschiedlichen Varianten mit den übrigen Modulen kombiniert werden. Beispielsweise ist es möglich die Seitenteile der Fig. 2b oder die Seitenteile der Fig. 2c mit einem Zellenträger gemäß der Fig. 1 bis 7b zu kombinieren. Alternativ können diese Seitenteile aber auch mit einem Zellenträger kombiniert werden, der beispielsweise einteilig ohne einen integrierten Kühlraum ausgebildet ist. Zudem ist es auch möglich, einzelne Erfindungsaspekte eines Moduls wegzulassen oder miteinander zu kombinieren. So ist es beispielsweise denkbar einen Zellenträger mit einem einzigen Aufnahmeraum für die aufzunehmenden Zellen, mit einem einzigen Aufnahmeraum für die Leiterplatte oder mit sowohl einem Aufnahmeraum für die aufzunehmenden Zellen als auch einem Aufnahmeraum für die Leiterplatte auszubilden. Analog ist es möglich, auf die nachfolgend beschriebene Vergussmasse in einem oder beiden Aufnahmeräumen zu verzichten.

Der Zellenträger 12 der Fig. 1 bis 7b definiert einen Aufnahmeraum 30 für die aufzunehmenden Akkuzellen 20 und bildet bei der gezeigten Ausführungsform mit einem modularen Gehäuse 10a eine Haltestruktur für die weiteren daran anzubringenden Gehäuseteile.

Der Gehäusedeckel 16 ist insbesondere in den Figuren 1 und 6 gezeigt und umfasst wenigstens zwei Belüftungsausnehmungen 18a und 18b, über die Kühlluft aus der Umgebung des Akkupacks 10 in das Gehäuseinnere eindringen und wieder an die Umgebung abgegeben werden kann. Bei dem vorliegenden Akkupack 10 handelt es sich somit um ein sogenanntes luftgekühltes Akkupack.

Im Unterschied zu bekannten Akkupacks, bei denen die im Gehäuseinneren aufgenommenen Akkuzellen zumindest im Bereich ihrer Mantelfläche von der Kühlluft umströmt werden können, ist bei dem vorliegenden Akkupack ein Kühlraum 12a vorgesehen, der in dem Zellenträger 12 ausgebildet ist. Der von dem Aufnahmeraum 30 der Akkuzellen 20 getrennt ausgebildete Kühlraum bildet einen gegenüber dem Aufnahmeraum 30 abgeschlossenen Kühlkanal mit Verzweigungen zwischen den Lagen mehrerer Akkuzellen 20 und mündet jeweils in schlitzförmige Belüftungsöffnungen 12b, die im montierten Zustand des Akkupacks 10 fluchtend mit den Belüftungsausnehmungen 18a angeordnet sind (vgl. Fig. 5).

In der dargestellten Ausführungsform umfasst das erfindungsgemäße Akkupack 10 zehn Akkuzellen 20, die im Wesentlichen parallel zueinander angeordnet sind. Diese sind in zwei Lagen angeordnet. Wie man beispielsweise in der Figur 6 erkennen kann, erstreckt sich eine Verzweigung des kanalförmigen Kühlraums 12a unterhalb der unteren Lage der Akkuzellen 20, eine Verzweigung des kanalförmigen Kühlraums 12a zwischen der unteren Lage der Akkuzellen 20 und der oberen Lage der Akkuzellen 20 und eine weitere Verzweigung des kanalförmigen Kühlraums 12a oberhalb der oberen Lage der Akkuzellen 20.

Wie man in der Figur 5 ferner erkennen kann, setzt sich der Zellenträger 12 aus zwei im wesentlichen spiegelsymmetrischen Halterteilen 12c zusammen, die in einer Teilungsebene zusammengesetzt sind. Der Kühlkanal bzw. kanalförmige Kühlraum 12a ist im Bereich dieser Teilungsebene ausgebildet und wird dadurch geschlossen, dass die beiden Halterteile 12c verbunden werden. Die Teilungsebene ist dabei diejenige virtuelle Ebene, die mit der umlaufenden Teilungsnaht T (in Figur 4) zusammenfällt. In den Figuren 5 und 6 ist jeweils ein Teil eines Halterteils 12c weggeschnitten, damit man die virtuelle Teilungsebene erkennen und das Zusammenwirken der Halterteile 12c nachvollziehen kann.

Die Akkuzellen 20 werden über Leiterbleche 22 im Bereich ihrer Pole 20a und 20b elektrisch kontaktiert, wobei die Leiterbleche 22 wiederum elektrisch mit einer Leiterplatte 24 verbunden sind. Die Leiterplatte 24 kann mit einer Reihe von Elektronikkomponenten bestückt sein, auf die nachfolgend nicht näher eingegangen werden soll. Wie in der Figur 3 und der Figur 4 deutlich zu erkennen ist, ist die Leiterplatte 24 über nicht näher bezeichnete Schrauben lösbar mit dem Zellenträger 12 verbunden.

Zur Befestigung des Gehäusedeckels 16 und des Seitenteils 14 weist der Zellenträger 12 zudem Befestigungsvorsprünge 26 mit Gewindeausnehmungen 26a auf, in die entsprechend Befestigungsschrauben (nicht dargestellt) zur Befestigung des Gehäusedeckels 16 und des Seitenteils 14 eingeschraubt werden können. Weiterhin umfasst der erfindungsgemäße Zellenträger 12 auf seiner der Leiterplatte zugewandten Oberseite 34 wenigstens eine Ausnehmungen 28a auf, die beispielsweise zur Einführung eines Temperaturfühlers oder dergleichen ausgehend von der Leiterplatte 24 genutzt werden kann.

Um eine möglichst effiziente Wärmeableitung der aufgenommenen Akkuzellen 20 im Gehäuseinneren, das heißt insbesondere im Inneren des Zellenträgers 12, zu gewährleisten und zugleich die eingesetzten Zellen 20 vor Feuchtigkeit und Metallpartikeln zu schützen, wird der von dem Zellenträger 12 im Inneren begrenzte Aufnahmeraum 30 mit den eingesetzten Akkuzellen (vgl. Figur 4 und Figur 6) mit einer Vergussmasse 30a vergossen (vgl. Figur 2a und 3).

Die zylinderförmigen Akkuzellen 20 werden in den zweiteiligen Zellenträger 12 eingesetzt und schließen bündig in einer Ebene ab. Mittels Leiterblechen 22 als Verbindungsleiter werden die Akkuzellen 20 miteinander in Reihe oder parallelgeschaltet und mit der Leiterplatte 24 verbunden. Im Anschluss daran wird die Vergussmasse 30 in den Aufnahmeraum 30 eingegossen und dichtet die verbliebenen Hohlräume zwischen den Akkuzellen 20 und dem Zellenträger 12 im Inneren des Aufnahmeraums 30 ab. Wie in der Figur 2a und der Figur 3 zu erkennen ist, werden dabei auch die Leiterbleche 22 mitvergossen. Einzig im Bereich der Pluspole P1 der Akkuzellen 20 verbleibt eine Ausnehmung oder Aussparung, um sicherzustellen, dass die Zellen in diesem Bereich, in dem üblicherweise auch ein Überdruckventil an den Zellen 20 vorgesehen ist, bei Überhitzung ausgasen können.

Eine besonders effiziente Ummantelung der Akkuzellen 20 mit der Vergussmasse im Bereich ihrer Mantelflächen im Inneren des Zellenträgers 12 wird auch dadurch erreicht, dass die aufgenommenen Akkuzellen nicht vollständig im Bereich ihrer Mantelflächen von dem Zellenträger 12 umgeben sind, sondern nur teilflächig abgestützt durch rippenartige Vorsprünge 30b im Inneren des Zellenträgers 12 (vgl. Figur 5) aufgenommen sind.

Damit die aufgenommenen Akkuzellen 20 nicht nur in der gewünschten Weise parallel zueinander angeordnet, sondern auch in Abstand zueinander gehalten werden können, um auf diese Weise eine besonders effiziente Ummantelung der Zellen zu gewährleisten, weist der Zellenträger Lagerabschnitte 32 auf, die zur Lagerung der Akkuzellen 20 mit einem geringfügigen Abstand zueinander vorgesehen sind.

Wie bereits erwähnt, sind auch die Seitenwände bzw. Seitenteile 14 des Gehäuses des Akkupacks 10 als lösbare Gehäuseteile ausgebildet. In der Figur 2b ist besonders gut erkennbar, dass der Seitendeckel 14 Befestigungsfortsätze 36 aufweist, die Bohrungen 36a zur Aufnahme einer Schraube umfassen. Die Schrauben (angedeutet durch das Bezugszeichen 46, vgl. Fig. 1) können durch die Bohrungen 36a des Befestigungsfortsatzes 36 in korrespondierende Gewindebohrungen 26a im Bereich der Befestigungsabschnitte 26 des Zellenträgers 12 eingeschraubt werden.

Weiterhin weist der Seitendeckel 14 eine obere Haltekante 38 auf, die im montierten Zustand des Akkupacks 10 von einer korrespondierenden Haltekante 50 des Gehäusedeckels 16 übergriffen werden kann (vgl. Figur 2b) sowie eine Haltekante 40, die ihrerseits eine korrespondierende Haltekante 48 (vgl. Figur 1 und Figur 6) des Zellenträgers 12 im montierten Zustand des Akkupacks 10 zu übergreifen vermag.

Um eine Abdichtung des Akkupacks im Bereich der resultierenden Polbereiche, d.h. in den Bereichen des Akkupacks10, in den die nicht vergossenen Pole P1 der einzelnen Akkuzellen münden, zu erreichen, ist zudem jeweils eine umlaufende Sicherung 44 vorgesehen, die im montierten Zustand des zugehörigen Seitenteils 14 am Zellenträger 12 den resultierenden Polbereich des Akkupacks 10 luftdicht gegenüber der Umgebung abzudichten vermag. Diese Dichtung 44 kann beispielsweise als Elastomerdichtung oder als Nutfedergeometrie ausgebildet sein.

Zudem ist in einem Bereich der Seitenteile 14, der in montiertem Zustand des Akkupacks 10 in Anlage an die die nicht vergossenen Pole P1 der einzelnen Akkuzellen 20 gelangt, ein Dichtungsbereich 42 vorgesehen. Diese Dichtungsbereiche 42 sind vorliegend einteilig mit dem zugehörigen Seitenteil 14 ausgebildet und können beispielsweise ebenfalls als Elastomerdichtung oder als Nutfedergeometrie ausgebildet sein. In der dargestellten Ausführungsform setzt sich das Seitenteil 14 aus einer Weichkomponente und einer Hartkomponente zusammen, wobei die Weichkomponente im Dichtungsbereich 42 vorgesehen ist und beispielsweise ein Elastomer umfasst.

Grundsätzlich ist es natürlich auch möglich nur eine dieser zusätzlichen Dichtungsmaßnahmen vorzusehen, d.h. beispielsweise nur die Dichtungsbereiche 42 oder nur die Abdichtung mit einer umlaufenden Dichtung 44.

Um unabhängig von der Art der Dichtungsmaßnahme sicherzustellen, dass ein Ausgasen der Akkuzellen im Falle einer Überhitzung einer oder mehrerer Akkuzellen im Inneren des Akkupacks 10 möglich bleibt (und um auf diese Weise potentielle Explosionen zu vermeiden), sind im Bereich der Seitenteile 14 Bereiche mit Sollbruchstellen 54 vorgesehen, deren verminderte Wandstärke im Falle eines Überdrucks in einem der Polbereiche P1 ein Durchbrechen des Seitenteils 14 ermöglicht und damit einen Luftaustausch in das Gehäuseinnere. Sind Dichtungsbereiche 42 vorgesehen, ist es sinnvoll, jedem Dichtungsbereich 42 eine Sollbruchstelle zuzuordnen.

Die Bereiche der Sollbruchstellen 54 sind in der dargestellten Ausführungsform zusätzlich von einem ringförmigen Vorsprung 54a umgeben. Dieser Erfindungsaspekt ist unabhängig von der Ausgestaltung mit der Verwendung von einer oder mehreren Vergussmassen sowie von der spezifischen Ausgestaltung des Zellenträgers und kann mehrere Funktionen übernehmen: zum einen sind diese Vorsprünge 54a vorliegend so angeordnet und ausgebildet, dass die Stirnflächen der in dem zugehörigen Zellenträger 12 aufgenommenen Akkuzellen 20 an den ringförmigen Vorsprüngen 54a zur Anlage kommen können. Bei einer Ausgestaltungsform, bei der diese Vorsprünge aus einem elastischen Material hergestellt sind, wird hierüber eine Stoßdämpfung der Akkuzellen 20 erreicht, insbesondere wenn, wie bei der gezeigten Ausführungsform, bei dem zugehörigen Zellenträger an den Aufnahmebereichen keine die Akkuzellen 20 begrenzende Schulter oder gleichen vorgesehen ist. Die Akkuzellen 20 sind somit in Richtung ihrer Längsachse schwimmend in dem Zellenträger 12 gelagert. Dementsprechend wird mit Hilfe der ringförmigen Vorsprünge 54a eine definierte Lagerung mit gleichzeitigem Spielausgleich erreicht. Von außen auf den Akkupack einwirkende Stöße werden weiterhin über die ringförmigen Vorsprünge 54a gedämpft und zugleich kann, da die ringförmigen Vorsprünge bevorzugt aber nicht notwendigerweise im Bereich der Sollbruchstellen 56 angeordnet sind und diese umgeben, eine Dichtung im Falle des erforderlichen Ausgasens erfolgen.

In der Fig. 2b sind beispielhaft nur vier solcher Vorsprünge 54a gezeigt, die an den nicht vergossenen Polen P1 gemäß Fig. 3 zur Anlage kommen können. Insbesondere, aber nicht nur, bei einer Ausführungsvariante, bei der der Aufnahmeraum 30 für die Akkuzellen 20 nicht oder nur teilweise vergossen wird und die weiteren Pole der benachbarten Akkuzellen 20 nicht vergossen sind, können selbstverständlich auch mehr ringförmige Vorsprünge 54a (wie in Fig. 2c gezeigt) oder weniger Vorsprünge 54a vorgesehen sein.

Ein weiterer erfinderischer Aspekt ist ebenfalls in der Fig. 2b gezeigt und betrifft insbesondere Akkupacks mit unvergossenen Leiterblechen 22. Die Seitendeckel 14 weisen zusätzlich an ihrer Innenseite Trennstege 54b auf, die derart angeordnet und ausgerichtet sind, dass sie im montierten Zustand zwischen zwei benachbarten montierten Leiterbleche 22 vorstehen und diese voneinander trennen. Die Leiterbleche 22 weisen aufgrund der Schaltung der Akkuzellen 20 unterschiedliche Spannungen auf, weshalb eine solche Trennung der elektrischen Bereiche vorteilhaft ist. Auf diese Weise kann weiter das Risiko von Kurzschlüssen infolge von beispielsweise Feuchtigkeit bei unvergossenen Leiterblechen 22 verringert werden. Dabei ist zu beachten, dass auch an dem Zellenträger korrespondierende Zwischenstege (nicht dargestellt) vorgesehen sein können, die mit den Zwischenstegen 54b der Seitendeckel 14 zusammenwirken und gemeinsam einen Trennsteg zwischen den benachbarten Leiterblechen 22 bilden. Alternativ oder zusätzlich zu der gezeigten Ausbildung der Trennelemente als Trennstege sind auch andere Gestaltungsvarianten denkbar, beispielsweise als oder mit Vorsprüngen, die gegebenenfalls mit korrespondierenden Vorsprüngen an dem Zellenträger zum Herstellen einer elektrischen Trennung zusammenwirken.

Weiterhin ist, wie in den Figuren 3 bis 7b gut zu erkennen ist, ein weiterer Aufnahmebereich 50 zur Aufnahme der Leiterplatte 24 mit den Elektronikkomponenten vorgesehen. Dieser ist in der gezeigten Ausführungsform einteilig mit dem Zellenträger 12 an dessen Oberseite ausgebildet und in einer Richtung von den Akkuzellen 20 und dem zugehörigen Aufnahmeraum 30 weggewandt geöffnet. Wie weiterhin in der Figur 5 gut zu erkennen ist, ist dieser zweite Aufnahmeraum 50 zur Aufnahme der Leiterplatte 24 von dem ersten Aufnahmeraum 30 zur Aufnahme der Akkuzellen im Wesentlichen getrennt ausgebildet.

Wie auch der erste Aufnahmeraum 30 zur Aufnahme der Akkuzellen 20 kann der zweite Aufnahmeraum 50 zur Aufnahme der Leiterplatte 24 mit einer Vergussmasse 52 vergossen sein (vgl. Figur 2a). Dabei werden die Belüftungsöffnungen 12a, 12b fluchtend mit korrespondierenden Öffnungen bzw. Aussparungen 24a. 24b an der Leiterplatte 24 angeordnet und bleiben auch in der Vergussmasse 52 ausgespart (vgl. Figur 2a). Die Vergussmasse 52 kann aus einem identischen Material wie die erste Vergussmasse 30a oder einem abweichenden Material hergestellt sein. Vorteilhaft sind Eigenschaften der Vergussmasse wie thermische Leitfähigkeit, Feuerresistenz und eine schwere Entflammbarkeit sowie eine möglichst geringe elektrische Leitfähigkeit.

Insgesamt ermöglicht die spezifische Gestaltung des Gehäuses des erfindungsgemäßen Akkupacks mit einem in dem Zellenträger 12 eingeschlossenen Kühlraum zum einen eine Luftkühlung der darin aufgenommenen Akkuzellen, wodurch die Lebensdauer des Akkupacks signifikant erhöht wird. Zum anderen wird jedoch sichergestellt, dass mit der Kühlluft mitgeführte metallische Staubpartikel und/oder Luftfeuchtigkeit nicht in den Bereich der Akkuzellen und ggf. der Elektronik gelangen und dadurch Kurzschlüsse und insbesondere eine Beschädigung des Akkupacks erreichen können. Die verwendete Vergussmasse stellt eine zusätzliche Maßnahme zur Sicherung vor Metallstaub und Feuchtigkeit dar und dient zugleich zur Kühlung des Akkupacks. Bei einer geeigneten Materialwahl mit hoher Wärmeleitfähigkeit kann zudem der Zellenträger zur Wärmeableitung genutzt werden. Auf diese Weise wird ein besonders langlebiges und robustes Akkupack bereitgestellt.

Auf der Leiterplatte 24 sind eine Reihe von Elektronikkomponenten aufgebracht. Hierzu gehören auch eine Ladestandsanzeige des Akkupacks, welche allgemein mit dem Bezugszeichen 60 bezeichnet ist. Diese umfasst in der gezeigten Ausführungsform vier LEDs 64 (angedeutet in der Fig. 4), die auf der Leiterplatte 24 bestückt sind, sowie einen Tasterschalter 62 (angedeutet in der Fig. 4) zum Betätigen der Ladestandanzeige 60. In dem Gehäusedeckel 16 sind vier korrespondieren Öffnungen 18a vorgesehen, über die zum einen ein Luftaustausch mit der Umgebung des Akkupacks 10 ermöglicht wird, und durch die zum anderen von außen erkennbar bleibt, ob die einzelnen LEDs leuchten oder nicht. In bekannter Weise kann die Ladestandsanzeige durch Drücken des Tasterschalters, der sich durch eine weitere Ausnehmung an dem Gehäusedeckel 16 erstreckt, betätigt werden.

Damit die Ladestandsanzeige 60 vor von außen eindringendem Schmutz und Feuchtigkeit geschützt ist, kann diese auch teilweise mit der weiteren Vergussmasse 52 vergossen werden (wie in Fig. 2a gezeigt). Dabei ist die weitere Vergussmasse 52 aus einem lichtleitenden Material, damit von außen ein Leuchten der LEDs weiter erkennbar bleibt. Weiterhin ist ein Dichtelement 66 vorgesehen, das auf die Leiterplatte 24 vor dem Verguss mit der weiteren Vergussmasse 52 aufgelegt wird und sowohl den Tasterschalter 62 mit einem entsprechenden Dom 62a überdeckt als auch die LEDs seitlich dichtend umgibt. Spezielle Aussparungen 64a im Dichtelement 66 sind den LEDs 64 zugeordnet, damit diese nicht von dem Dichtelement 66 abgedeckt werden und ein Leuchten der LEDs 64 durch die korrespondierenden Öffnungen 18a im Gehäusedeckel 16 von außen sichtbar bleibt. Das Dichtelement 66 kann teilweise von der weiteren Vergussmasse 52 überzogen werden, insbesondere im Bereich der LEDs, wodurch eine verbesserte Dichtwirkung erzielt werden kann. Insbesondere der Domabschnitt 62a, welcher den Tasterschalter 62 überdeckt, ist in seiner Höhe, d.h. der Erstreckung senkrecht zu der Leiterplatte 24, größer als die weitere Vergussmasse 52, um sicherzustellen, dass dieser weiterhin betätigbar bleibt (vgl. beispielsweise Fig. 2a).

Alternativ kann das Dichtelement 66 auch seinerseits aus einem lichtdurchlässigen Material gebildet sein, so dass auf die Aussparungen 64a verzichtet werden kann.

Eine weitere denkbare Alternative zu der in der Fig. 2 gezeigten Ausführungsform sieht vor, dass die weitere Vergussmasse 52 eine geringere Höhe aufweist als das Dichtelement 66 im Bereich seiner geringsten Höhe, so dass diese das Dichtelement 66 nicht überzieht. Das Dichtelement 66 dichtet in diesem Fall den Tasterschalter 62 nach außen ab und die Elemente der Ladestandsanzeige 60 gegenüber der weiteren Vergussmasse 52 (vgl. auch Fig. 7b).

In bekannter Weise ist die Leiterplatte 24 weiterhin mit Anschlussschwertern (auch als Anschlussfedern oder Kontaktfedern bekannt) 56 bestückt (in der Fig. 7a sind fünf gezeigt), die gemeinsam eine Schnittstelle des Akkupacks 10 mit einer externen Spannungsquelle oder einem externen Spannungsabnehmer bilden. In bekannter Weise werden die Anschlussschwerter 56, wie beispielsweise in Fig. 2a, 3 und 4 gezeigt, von einem Elektronikbecher 70 übergriffen, der eine Anzahl von Verbindungsschlitzen 72 aufweist, die den jeweiligen Anschlussstellen, gebildet durch die Anschlussschwerter 56, zugeordnet sind. Unter anderem erkennt man in der Fig. 7b, dass auf die weitere Vergussmasse 52 ein zweites Dichtelement 74 aufgelegt ist. Dieses dient dazu, einen Spielausgleich und eine dichte Auflage des Elektronikbechers auf die weitere Vergussmasse 52 zu ermöglichen. Alternativ kann das zweite Dichtelement 74 grundsätzlich auch vor dem Vergießen auf die Leiterplatte 24 aufgelegt werden und mit der weiteren Vergussmasse 52 vergossen werden. In diesem Falle ist die Höhe des zweiten Dichtelements 74 so zu wählen, dass diese größer ist als die Höhe der Vergussmasse, damit dieses nicht von der Vergussmasse überzogen wird und weiterhin seine spielausgleichende Wirkung entfalten kann.

Das erste und das zweite Dichtelement 66 und 74 können jeweils aus einem elastischen Material, beispielsweise aus Moosgummi oder dergleichen hergestellt sein.

Zur exakten Positionierung der beiden Dichtelemente 66 und 74 kann der Zellenträger Positionierhilfen aufweisen, die sich in einer im wesentlichen senkrechten Richtung von der Auflageebene A des zweiten Aufnahmeraums 50 für die Leiterplatte nach außen hin erstrecken und sowohl zur Positionierung der Leiterplatte als auch der aufgelegten Dichtelemente dienen können. Hierzu sind an den Dichtelementen 66 und 74 entsprechende Ausnehmungen vorgesehen.

In den Figuren 7a und 7b erkennt man eine weitere Besonderheit des vorliegenden Akkupacks 10, in Form der Verbindungsbrücken 80. Diese dienen dazu, die Leiterbleche 22 mit der Leiterplatte 24 zu verbinden. Dabei weisen sie einen gekrümmten Querschnitt auf. Ein erstes Ende 82 ist mit der Leiterplatte 24 elektrisch und mechanisch verbunden, beispielsweise auf diese aufgelötet und/oder mit einem Befestigungsvorsprung 80a formschlüssig in einer korrespondierenden Ausnehmung an der Leiterplatte 24 eingesetzt. Ein zweites Ende 84 ist zur Verbindung mit einem Leiterblech 22 vorgesehen und ragt aus dem weiteren Aufnahmeraum 50 derart heraus, dass im Falle eines Vergusses mit der weiteren Vergussmasse 52 dieses nicht mitvergossen wird. Der Verbindungssteg 86 zwischen den beiden Enden 82 und 84 ist gekrümmt und ermöglicht, dass sich das zweite Ende aus dem weiteren Aufnahmeraum 50 in Richtung zu dem zu verbindenden Leiterblech 22 erstreckt, wodurch eine einfache und litzenfreie Kontaktierung erreicht wird. Die Leiterbleche 22 können ebenfalls mittels einer Lotverbindung elektrisch mit den Verbindungsbrücken 80 verbunden sein. Alternative und zusätzliche Verbindungsarten, die eine elektrische Kontaktierung der Verbindungsbrücken mit den Leiterblechen und/oder der Leiterplatte ermöglichen sind selbstverständlich ebenfalls denkbar.

An dem Zellenträger 12 können in dem Bereich der Begrenzungswände des weiteren Aufnahmeraums 50 kleine Aussparungen oder Aufnahmen 88 vorgesehen sein (vgl. Fig. 7a, 7b), durch die sich die Verbindungsbrücken 80 erstrecken können. Diese dienen auch der definierten Anbringung der Verbindungsbrücken 80 an der Leiterplatte 24. Grundsätzlich sind diese bei einer entsprechenden Ausgestaltung der Verbindungsstege 86 auch entbehrlich.

Eine Sonderform der Verbindungsbrücken bilden die Anschlussbleche 90a und 90b, die zudem eine elektrische Verbindung der zugeordneten Leiterbleche 22 mit der elektrischen Schnittstelle des Akkupacks 10 ermöglichen. Diese verfügen in analoger Weise über ein erstes Ende 92a, b und zweites Ende 94a, b sowie einen zugehörigen Verbindungssteg 96a, b, der eine elektrische Kontaktierung der zugeordneten Leiterbleche 22 auch nach einem vollständigen Verguss der Leiterplatte 24 ermöglicht.

Wie in der Fig. 7a zu erkennen ist, kontaktiert das Anschlussblech 90a indirekt ein erstes endseitiges Anschlussschwert 56a der elektrischen Schnittstelle des Akkupacks 10 über eine dazwischengeschaltete erste Sicherung 100a, während das Anschlussblech 90b ein zweites endseitiges Anschlussschwert 56b indirekt über eine dazwischengeschaltete zweite Sicherung 100b kontaktiert. Zu Befestigung der Anschlussbleche 90a und 90b sind zudem jeweils Befestigungsvorsprünge 98a, 98b vorgesehen, die sich in analoger Weise zu den Befestigungsvorsprüngen 80a in Richtung zu der Leiterplatte 24 erstrecken und in entsprechende Aufnahmen an der Leiterplatte 24 für eine definierte Anordnung auf der Leiterplatte 24 aufgenommen sind.

Bei der Herstellung der Verbindungsbrücken 80 und der Anschlussbleche 90a, 90b werden diese Blechteile aus einem Blech ausgestanzt, und die Befestigungsvorsprünge 80a, 98a und b, welche sich beim Stanzteil seitlich erstrecken, werden anschließend entsprechend umgebogen. Alternative Herstellungsverfahren sind selbstverständlich ebenfalls denkbar.

Aufgrund ihrer spezifischen Ausgestaltung ermöglichen die Verbindungsbrücken und Anschlussbleche es, die Leiterplatte 24 zu einem vergleichsweise frühen Zeitpunkt im Montageprozess an dem Zellenträger 12 in dem weiteren Aufnahmeraum 50 anzubringen und mit der weiteren Vergussmasse 52 zu vergießen. Dabei wird die Leiterplatte 24 in allen Bereichen mit der weiteren Vergussmasse 52 überzogen, außer in dem Bereich des Tasterschalters 62, der von dem Dichtelement 66 übergriffen ist. Ohne die spezifischen Verbindungsbrücken wäre infolge des Überzugs mit der weiteren Vergussmasse eine elektrische Kontaktierung der Leiterplatte zur Verbindung mit den Akkuzellen nicht mehr möglich. Zugleich ist die besonders frühzeitige Bestückung des Zellenträgers mit der Leiterplatte und ein ebenfalls früher Schutz der Leiterplatte durch die weitere Vergussmasse sehr vorteilhaft, da hierdurch das Handling im Montageprozess nennenswert vereinfacht wird. Weiterhin ermöglicht der frühe Verguss ein zuverlässiges Aushärten der weiteren Vergussmasse, ohne dass hierfür die weitere Montage verzögert werden müsste.

Die weitere Vergussmasse 52 stellt nicht nur einen Schutz der Leiterplatte 24 gegen äußere Einflüsse bereit, sondern fixiert zusätzlich durch einen Stoffschluss die an der Leiterplatte 24 angebrachten mitvergossenen Elemente, d.h. das Dichtelement 66, die Verbindungsbrücken 80 sowie die Anschlussbleche 90.

Das Vergießen der Leiterplatte mit einer weiteren Vergussmasse ermöglicht darüber hinaus eine vergleichsweise einfache und kostengünstige Ausgestaltung einer Sicherung 100a, 100b. Diese kann ebenfalls durch ein einfaches Blechteil verwirklicht werden.

In der Ausführungsform der Fig. 7a und 7b sind die Sicherungen 100a, 100b durch ein Blechteil mit einem ersten Ende und einem zweiten Ende ausgebildet, die jeweils durch eine Verbindungssteg miteinander verbunden sind. Die beiden ersten Enden dienen jeweils der elektrischen Kontaktierung der zugehörigen Sicherung 100a, b mit einem Anschlussblech 90a, b und beiden zweiten Enden dienen jeweils der elektrischen Kontaktierung der zugehörigen Sicherung 100a, b mit einem Anschlussschwert 56a, b der elektrischen Schnittstelle des Akkupacks 10. Weiterhin sind die beiden Enden 102 und 104 auch in der Art der Befestigungsvorsprünge 80a, 98a, 98b umgebogen und greifen in korrespondierende Ausnehmungen in der Leiterplatte 24 ein, um eine definierte Anordnung auf der Leiterplatte 24 und elektrischen Verbindung mit den jeweiligen Anschlussteilen sicherzustellen. Alternative Verbindungsarten sind alternativ oder zusätzlich ebenfalls denkbar.

Sobald die Leiterplatte 24 mit der weiteren Vergussmasse 52 vergossen ist, sind auch die Sicherungen 100a, 100b zumindest abschnittsweise von der Vergussmasse 52 überzogen und durch diese gesichert. Damit kann die Vergussmasse 52 die Funktion eines zusätzlichen Gehäuses ersetzen, das bei zertifizierten Sicherungen als Zukaufteile vorgesehen ist. Hierdurch kann eine besonders einfach und kostengünstig herzustellende Sicherung bereitgestellt werden, die zugleich in ihrer Funktion ebenso zuverlässig ist, wie die bekannten zertifizierten Sicherungen.

Die weitere Vergussmasse 52 dient bei der vorliegenden Erfindung somit nicht nur als Schutz der Leiterplatte 24 in eingebautem Zustand, sondern ermöglicht zusammen mit dem Dichtelement 66 auch eine sichere Abdichtung des Tasters, stellt eine zuverlässige (stoffschlüssige) Fixierung der über einen Formschluss an der Leiterplatte 24 angebrachten Verbindungsbrücken, Anschlussbleche und Sicherungsteile bereit und ersetzt ein Sicherungsgehäuse für die Sicherungen 100a, 100b.

Nachfolgend wird ein beispielhaftes Herstellungsverfahren eines erfindungsgemäßen Akkupacks 10 beschrieben:
Der Zellenträger 12 und die weiteren Gehäuseteile 14, 16, 70 werden aus beispielsweise einem Kunststoff urgeformt, beispielsweise mittels Spritzguss. Je nach Ausgestaltung beispielsweise der Seitenteile 14 können dabei auch mehrere Kunststoffkomponenten, beispielsweise eine Hartkomponente und eine Weichkomponente, in unterschiedlichen Bereichen eingesetzt werden. Die Leiterplatte 24 wird mit den notwendigen Elektronikkomponenten bestückt und mit einer elektrischen Schnittstelle in Form von beispielsweise Anschlussschwertern 56 sowie den notwendigen Ausnehmungen versehen. Die Verbindungsbrücken 80, Anschlussbleche 90 und Sicherungen 100 werden aus Blechplatten ausgestanzt und entsprechend umgebogen.

Die Leiterplatte 24 wird zusätzlich mit den Verbindungsbrücken 80, Anschlussblechen 90 und Sicherungen 100 bestückt und in den weiteren Aufnahmeraum 50 des Zellenträgers 12 eingesetzt. Die Dichtelemente 66 und 74 werden auf den Bereich der Ladestandsanzeige 60 bzw. der Anschlussschwerter 56 aufgelegt. Gegebenenfalls werden weitere Elemente ergänzt; beispielsweise kann ein Temperatursensor vorgesehen werden, der in den Aufnahmeraum 30 für die Akkuzellen eingeführt wird.

Ist die Leiterplatte 24 vollständig mit allen damit zu verbindenden Elementen versehen, wird diese mit der weiteren Vergussmasse 52 vergossen. Diese bedeckt nahezu die gesamte Leiterplatte 24. Nur in dem Bereich der Dichtelemente 66, 74 verhindern letztere eine Benetzung der Oberfläche der Leiterplatte 24 mit der weiteren Vergussmasse 52. Die weitere Vergussmasse 52 kann nun aushärten und schützt die Elektronik, so dass ein vereinfachtes Handling der vormontierten Baugruppe von Zellenträger 12 und Elektronik ermöglicht ist.

In einem weiteren Verfahrensschritt wird der Zellenträger 12 mit den Akkuzellen bestückt. Diese werden mittels Leiterblechen über die zweiten Enden der Verbindungsbrücken 80 und der Anschlussbleche 90 mit der Elektronik der Leiterplatte 24 verbunden. Danach wird der Aufnahmeraum 30 mit der Vergussmasse befüllt und dichtet auch den Aufnahmeraum 30 zuverlässig ab.

Schließlich werden die weiteren Gehäuseteile angebracht, d.h. seitlich werden die Seitenteile 14 angebracht und an der Akkuoberseite wird das Dichtelement 74 im Bereich der elektrischen Schnittstelle des Akkupacks 10 um die aus der Vergussmasse 52 herausragenden Anschlussschwerter 56 herum auf die weitere Vergussmasse 52 aufgelegt. Anschließend kann der Elektronikbecher 70 auf das Dichtelement 74 aufgesetzt werden, ehe der Gehäusedeckel 16 aufgesetzt wird, der zugleich auch die Seitenteile 14 teilweise übergreift und formschlüssig sichert. Zusätzlich werden die Seitenteile 14 und der Gehäusedeckel 16 mit Schrauben lösbar an dem Zellenträger 12 fixiert.

## Patentansprüche

1. Akkupack (10) für eine Handwerkzeugmaschine umfassend wenigstens eine Akkuzelle (20), einen Zellenträger (12) zur abschnittsweisen Aufnahme und Lagerung der wenigstens einen Akkuzelle (20) in einem Aufnahmeraum (30) des Zellenträgers (12), eine Vergussmasse (30a), die in montiertem Zustand des Akkupacks (10) im Aufnahmeraum (30) des Zellenträgers (12) Zwischenräume zwischen dem Zellenträger (12) und der wenigstens einen darin aufgenommenen Akkuzelle (20) ausfüllt,
**dadurch gekennzeichnet, dass** der Zellenträger (12) ferner wenigstens einen von dem Aufnahmeraum (30) abgeschlossenen Kühlraum (12a) aufweist, der von dem Aufnahmeraum (30) getrennt in dem Zellenträger (12) ausgebildet ist und über Belüftungsöffnungen (12b) in Austausch mit der Umgebung steht, so dass der Kühlraum (12a) von Kühlluft durchströmt werden kann,
wobei das Akkupack (10) ferner ein modulares Gehäuse (10a) aufweist, das neben dem Zellenträger (12) wenigstens ein mit dem Zellenträger verbindbares Gehäuseteil, insbesondere zwei Seitenteile (14) und einen Gehäusedeckel (16), umfasst, wobei das wenigstens eine mit dem Zellenträger verbindbare Gehäuseteil, insbesondere die Seitenteile (14), an seiner den im Zellenträger (12) aufgenommenen Akkuzellen (20) zugewandten Oberfläche wenigstens ein elektrisch nicht-leitendes Trennelement in Form eines Trennstegs (54b) aufweist, das von dem zugehörigen Gehäuseteil in Richtung zu den Akkuzellen (20) vorragt, um Bauteile mit unterschiedlicher elektrischer Spannung voneinander zu trennen.

2. Akkupack (10) nach Anspruch 1,
**dadurch gekennzeichnet, dass** die Trennstege (54b) derart angeordnet und ausgerichtet sind, dass sie im montierten Zustand zwischen zwei benachbarten montierten Leiterblechen (22) vorstehen und diese voneinander trennen.

3. Akkupack (10) nach Anspruch 1 oder 2,
**dadurch gekennzeichnet, dass** der Zellenträger (12) wenigstens zwei Zellenträgerteile (12c) aufweist, die in montiertem Zustand des Akkupacks (20) miteinander verbunden sind.

4. Akkupack (10) nach Anspruch 3,
**dadurch gekennzeichnet, dass** die wenigstens zwei Zellenträgerteile (12c) im montierten Zustand des Akkupacks (10) gemeinsam den Kühlraum (12a) begrenzen.

5. Akkupack (10) nach Anspruch 3 oder 4,
**dadurch gekennzeichnet, dass** der Kühlraum (12a) einen Kühlluftkanal umfasst, der in der Teilungsebene (T) der wenigstens zwei Zellenträgerteile (12c) verläuft.

6. Akkupack (10) nach einem der vorhergehenden Ansprüche,
**dadurch gekennzeichnet, dass** wenigstens ein mit dem Zellenträger (12) verbindbares Gehäuseteil, insbesondere die Seitenteile (14) , an seiner den im Zellenträger (12) aufgenommenen Akkuzellen (20) zugewandten Oberfläche wenigstens ein Dämpfungselement aufweist, das aus einem elastomeren Material hergestellt ist.

7. Akkupack (10) nach Anspruch 6,
**dadurch gekennzeichnet, dass** das wenigstens eine Dämpfungselement aus Gummi hergestellt ist.

8. Akkupack (10) nach einem der vorhergehenden Ansprüche,
**dadurch gekennzeichnet, dass** die wenigstens eine Akkuzelle (20) derart in dem Aufnahmeraum (30) des Zellenträgers (12) aufgenommen ist, dass wenigstens einer der beiden Pole (P1) der Akkuzelle (20) im montierten Zustand des Akkupacks (10) von der Vergussmasse (30a) ausgespart ist.

9. Akkupack (10) nach einem der vorhergehenden Ansprüche,
**dadurch gekennzeichnet, dass** der wenigstens eine mit dem Zellenträger (12) verbindbare Gehäuseteil, insbesondere die Seitenteile (14), einen Dichtungsabschnitt (42) zur dichtenden Verbindung mit dem Zellenträger (12) aufweist, wobei der Dichtungsabschnitt (42) insbesondere einteilig mit dem Gehäuseteil ausgebildet sein kann und ein elastisches Material umfassen kann.

10. Akkupack (10) nach einem der vorhergehenden Ansprüche,
**dadurch gekennzeichnet, dass** das Akkupack (10) ferner eine Elektronikeinheit umfasst, die in einem weiteren, von dem Aufnahmeraum (30) der wenigstens einen Zelle getrennt ausgebildeten Aufnahmeraum (50) angebracht ist, wobei der weitere Aufnahmeraum (50) insbesondere an dem Zellenträger (12) ausgebildet und nach außen hin geöffnet ist.

11. Akkupack (10) nach Anspruch 10,
**dadurch gekennzeichnet, dass** die Elektronikeinheit im montierten Zustand des Akkupacks (10) in dem weiteren Aufnahmeraum (50) zur Aufnahme der Elektronikeinheit mit einer weiteren Vergussmasse (52) vergossen ist.

12. Akkupack (10) nach einem der vorhergehenden Ansprüche,
**dadurch gekennzeichnet, dass** wenigstens ein mit dem Zellenträger (12) verbindbares Gehäuseteil, insbesondere die Seitenteile (14), eine Einrichtung zum Überdruckausgleich aufweist.

13. Akkupack (10) nach einem der vorhergehenden Ansprüche,
**dadurch gekennzeichnet, dass** ein Teil des Akkupacks (10) von einer wasserabweisenden Umhüllung, beispielsweise aus einem Gummimaterial oder Kunststoffmaterial, umgeben ist.

## Claims

1. A battery pack (10) for a hand-held machine tool comprising at least one battery cell (20), a cell carrier (12) for accommodating and storing the at least one battery cell (20) in sections in a accommodating space (30) of the cell carrier (12), a potting compound (30a) which, in the assembled state of the battery pack (10) in the accommodating space (30) of the cell carrier (12), fills intermediate spaces between the cell carrier (12) and the at least one battery cell (20) received therein
**characterized in that** the cell carrier (12) further comprises at least one cooling space (12a) which is closed off from the accommodating space (30), is formed in the cell carrier (12) separately from the accommodating space (30), and is in communication with the environment via ventilation openings (12b) so that cooling air can flow through the cooling space (12a),
wherein the battery pack (10) further comprises a modular housing (10a) which, in addition to the cell carrier (12), comprises at least one housing part connectable to the cell carrier, in particular two side parts (14) and a housing cover (16), wherein the at least one housing part connectable to the cell carrier, in particular the side parts (14), has, on its surface facing the battery cells (20) accommodated in the cell carrier (12), at least one electrically non-conductive separating element in the form of a separator web (54b) which projects from the associated housing part in the direction of the battery cells (20) in order to separate components with different electrical voltages from one another.

2. The battery pack (10) according to claim 1,
**characterized in that** the separator webs (54b) are arranged and oriented such that, when mounted, they project between and separate two adjacent mounted conductor plates (22).

3. The battery pack (10) according to claim 1 or 2,
**characterized in that** the cell carrier (12) has at least two cell carrier parts (12c) which are connected to one another in the assembled state of the battery pack (20).

4. The battery pack (10) according to claim 3,
**characterized in that** the at least two cell carrier parts (12c) jointly delimit the cooling space (12a) in the assembled state of the battery pack (10).

5. The battery pack (10) according to claim 3 or 4,
**characterized in that** the cooling space (12a) comprises a cooling air duct which runs in the dividing plane (T) of the at least two cell carrier parts (12c).

6. The battery pack (10) according to any one of the preceding claims,
**characterized in that** at least one housing part which can be connected to the cell carrier (12), in particular the side parts (14) , has on its surface facing the battery cells (20) accommodated in the cell carrier (12) at least one damping element which is made of an elastomeric material.

7. The battery pack (10) according to claim 6,
**characterized in that** the at least one damping element is made of rubber.

8. The battery pack (10) according to any one of the preceding claims,
**characterized in that** the at least one battery cell (20) is received in the accommodating space (30) of the cell carrier (12) in such a way that at least one of the two poles (P1) of the battery cell (20) is recessed from the potting compound (30a) in the assembled state of the battery pack (10).

9. The battery pack (10) according to any one of the preceding claims,
**characterized in that** the at least one housing part which can be connected to the cell carrier (12), in particular the side parts (14), has a sealing section (42) for sealing connection to the cell carrier (12), it being possible for the sealing section (42) to be formed in particular in one piece with the housing part and to comprise an elastic material.

10. The battery pack (10) according to any one of the preceding claims,
**characterized in that** the battery pack (10) further comprises an electronic unit, which is mounted in an additional accommodating space (50) formed separately from the accommodating space (30) of the at least one cell, the additional accommodating space (50) being formed in particular on the cell carrier (12) and being open to the outside.

11. The battery pack (10) according to claim 10,
**characterized in that**, in the assembled state of the battery pack (10), the electronics unit is cast with an additional potting compound (52) in the additional accommodating space (50) for accommodating the electronics unit.

12. The battery pack (10) according to any one of the preceding claims,
**characterized in that** at least one housing part which can be connected to the cell carrier (12), in particular the side parts (14), has a device for overpressure compensation.

13. The battery pack (10) according to any one of the preceding claims,
**characterized in that** a part of the battery pack (10) is surrounded by a water-repellent envelope, for example made of a rubber material or plastic material.

## Revendications

1. Pack d'accumulateurs (10) pour une machine-outil à main, comprenant au moins un élément d'accumulateur (20), un support d'éléments (12) pour recevoir et stocker par sections l'au moins un élément d'accumulateur (20) dans un espace de réception (30) du support d'éléments (12), une masse de scellement (30a) qui, à l'état monté du pack d'accumulateurs (10), remplit dans l'espace de réception (30) du support d'éléments (12) des espaces intermédiaires entre le support d'éléments (12) et l'au moins un élément d'accumulateur (20) qui y est reçu,
**caractérisé en ce que** le support d'éléments (12) présente en outre au moins un espace de refroidissement (12a) fermé par l'espace de réception (30), qui est formé dans le support d'éléments (12) séparément de l'espace de réception (30) et qui est en échange avec l'environnement par des ouvertures d'aération (12b), de sorte que l'espace de refroidissement (12a) peut être parcouru par de l'air de refroidissement,
le pack d'accumulateurs (10) présentant en outre un boîtier modulaire (10a) qui comprend, outre le support d'éléments (12), au moins une partie de boîtier pouvant être reliée au support d'éléments, en particulier deux parties latérales (14) et un couvercle de boîtier (16), la au moins une partie de boîtier pouvant être reliée au support d'éléments, en particulier les parties latérales (14), présente, sur sa surface tournée vers les éléments d'accumulateur (20) logés dans le support d'éléments (12), au moins un élément de séparation non conducteur de l'électricité sous la forme d'une barrette de séparation (54b), qui fait saillie de la partie de boîtier associée en direction des éléments d'accumulateur (20), afin de séparer les uns des autres des composants présentant une tension électrique différente.

2. Pack d'accumulateurs (10) selon la revendication 1,
**caractérisé en ce que** les barrettes de séparation (54b) sont disposés et orientés de telle sorte que, à l'état monté, ils font saillie entre deux plaques conductrices montées adjacentes (22) et les séparent l'une de l'autre.

3. Pack d'accumulateurs (10) selon la revendication 1 ou 2,
**caractérisé en ce que** le support d'éléments (12) présente au moins deux parties de support de cellule (12c) qui sont reliées entre elles à l'état monté du pack d'accumulateurs (20).

4. Pack d'accumulateurs (10) selon la revendication 3,
**caractérisé en ce que** les au moins deux parties de support de cellule (12c) délimitent ensemble l'espace de refroidissement (12a) à l'état monté du pack d'accumulateurs (10).

5. Pack d'accumulateurs (10) selon la revendication 3 ou 4,
**caractérisé en ce que** l'espace de refroidissement (12a) comprend un canal d'air de refroidissement qui s'étend dans le plan de séparation (T) des au moins deux parties de support de cellule (12c).

6. Pack d'accumulateurs (10) selon l'une quelconque des revendications précédentes, **caractérisé en ce qu'**au moins une partie de boîtier pouvant être reliée au support d'éléments (12), en particulier les parties latérales (14), présente sur sa surface tournée vers les cellules d'accumulateur (20) logées dans le support d'éléments (12) au moins un élément d'amortissement qui est fabriqué en un matériau élastomère.

7. Pack d'accumulateurs (10) selon la revendication 6,
**caractérisé en ce que** ledit au moins un élément d'amortissement est fabriqué en caoutchouc.

8. Pack d'accumulateurs (10) selon l'une quelconque des revendications précédentes, **caractérisé en ce que** l'au moins un élément d'accumulateur (20) est logé dans l'espace de réception (30) du support d'éléments (12) de telle sorte qu'au moins l'un des deux pôles (P1) de l'élément d'accumulateur (20) est évidé par la masse de scellement (30a) à l'état monté du pack d'accumulateurs (10).

9. Pack d'accumulateurs (10) selon l'une quelconque des revendications précédentes, **caractérisé en ce que** la au moins une partie de boîtier pouvant être reliée au support d'éléments (12), en particulier les parties latérales (14), présente une section d'étanchéité (42) pour la liaison étanche avec le support d'éléments (12), la section d'étanchéité (42) pouvant en particulier être réalisée d'une seule pièce avec la partie de boîtier et pouvant comprendre un matériau élastique.

10. Pack d'accumulateurs (10) selon l'une quelconque des revendications précédentes, **caractérisé en ce que** le pack d'accumulateurs (10) comprend en outre une unité électronique qui est montée dans un autre espace de logement (50) formé séparément de l'espace de logement (30) de l'au moins une cellule, l'autre espace de logement (50) étant formé en particulier sur le support d'éléments (12) et étant ouvert vers l'extérieur.

11. Pack d'accumulateurs (10) selon la revendication 10,
**caractérisé en ce que** l'unité électronique, à l'état monté du pack d'accumulateurs (10), est scellée avec une autre masse de scellement (52) dans l'autre espace de réception (50) pour recevoir l'unité électronique.

12. Pack d'accumulateurs (10) selon l'une quelconque des revendications précédentes, **caractérisé en ce qu'**au moins une partie du boîtier pouvant être reliée au support d'éléments (12), en particulier les parties latérales (14), présente un dispositif de compensation de la surpression.

13. Pack d'accumulateurs (10) selon l'une quelconque des revendications précédentes, **caractérisé en ce qu'**une partie du pack d'accumulateurs (10) est entourée d'une enveloppe hydrofuge, par exemple en un matériau en caoutchouc ou en un matériau plastique.
